# EUROPEAN PATENT SPECIFICATION

(11) **EP 4 298 402 B1**
(45) Date of publication and mention of the grant of the patent: **08.05.2024**
(21) Application number: 22708185.8
(22) Date of filing: 02.03.2022
(51) Int. Cl.: G01C 21/34, G01C 21/36

(54) **VEHICLE ROUTING SYSTEM AND METHOD**
FAHRZEUGLEITSYSTEM UND -VERFAHREN
SYSTÈME ET PROCÉDÉ DE ROUTAGE DE VÉHICULE

(30) Priority: 02.03.2021 GB 202102915
(43) Date of publication of application: 03.01.2024
(73) Proprietor: Cubic Telecom Ltd, Dublin 2 (IE)
(72) Inventor: NAPIER, Barry, Dublin (IE); RYAN, Cathal, Dublin (IE)
(74) Representative: Murgitroyd & Company
(86) International application number: PCT/EP2022/055310
(87) International publication number: WO 2022/184787

(56) References cited:
- DE-A1-102018 209 804
- US-A1- 2015 226 563
- US-A1- 2021 012 584

## Description

### Field

The present application relates to vehicle routing and in particular to a vehicle routing system and method that utilises real time data input to trigger routing decisions.

### Background

Routing a vehicle is traditionally focussed on getting the driver to a defined destination in the quickest time or the most direct route possible. As technology has matured, real-time environmental data has been incorporated with the aim to decrease the trip time. This is achieved by factoring in data like current traffic conditions or roadworks. US2021012584 A1 discloses predicting a driving range of a vehicle. US2015226563 A1 discloses determining route information for a vehicle using onboard diagnostic data. DE102018209804 A1 discloses predicting a probable driving route.

A traditional navigation function can be described as the supply of a simple set of instructions to get from A to B, where A is the origin and B is a desired destination. A user may also introduce intermediate destinations before the final target. These are known as waypoints. A route can include many waypoints between the origin and destination.

For example, with origin set to home and destination set to office, a driver may set a waypoint to a fuel station situated roughly halfway between the two points. The route will now be calculated so that the waypoint is met - even if that means that the resulting route is longer or less efficient than the direct "A to B" routing solution. In this way, the driver retains control and responsibility for the ultimate trip time. Commercial routing engines, including those provided in 2021 by map algorithm software such that provided by Google and Microsoft, can take waypoints as parameters and route accordingly. However, these waypoints lack context and must be provided by the driver at the time of setting the destination.

In addition, although a route may be updated in real-time to reflect traffic conditions, a traditional system will not remind the driver that they forgot to add a waypoint.

Furthermore, there is conventionally a disconnect between a specific vehicle and the operator of that vehicle. As mobile devices have become ubiquitous, the functionality provided to the user of those devices has also become more sophisticated. For example, Google Maps has processing functionality that analyzes historical traffic patterns for roads over time. The software then combines this database of historical traffic patterns with live traffic conditions, using machine learning to generate predictions based on both sets of data. This prediction of future conditions can be merged with data reflective of historical journeys taken by a user of the mobile device (it being assumed that the user is carrying their mobile device) and then used to trigger changes in future behaviour of that user. For example, if the user has a predictable commute that takes place at a specific time to ensure a specific arrival at a destination, Google maps can use that information and interface it with the predicted commute congestion to notify the user that they should select an alternative route or indeed change their commute time to avoid that congestion. Whilst this information is useful, it is user specific and user centric. It may take into account generically that the user may commute by car, or by public transport, or by bicycle, but specific data about the actual type of transportation- which car, which vehicle providing that transport, which bicycle, is not used. There is no sharing or correlation between the vehicle specific data and the user specific data.

At the same time vehicles are becoming more and more data intensive - having the capacity and the functionality to capture, store, and process metrics indicative of vehicle performance. For example, vehicle sensors are well known for many years-for example a traditional fuel gauge provides a warning light in the dashboard of the vehicle advising that the fuel level is low. Vehicles will generally only notify a driver when current fuel level drops below a certain point, so it is unlikely that a driver will unknowingly run out of fuel, possibly damaging the vehicle fuel pump or other hardware. It is however also unlikely that waiting for the low fuel notification is the most efficient way to manage the fuel level of the vehicle. Here fuel is used in a scenario where the vehicle passively collects data (consumption, current fuel tank level), but may not be utilising the data in the most effective way.

It will be appreciated that a modern connected vehicle passively collects a vast amount of data from its many sensors. This data is traditionally used for vehicle diagnostics and the like. For example, during maintenance of the vehicle it is known to provide a direct interface to allow on-board diagnostics (OBD). OBD systems give the vehicle owner or vehicle mechanic access to data pertaining to the operational status of the various vehicle sub-systems. The amount of diagnostic information available via OBD has increased from that in the 1980s which pertained to malfunctions indicator lights to that available today which uses a standardized digital communications port to provide real-time data in addition to a standardized series of diagnostic trouble codes, or DTCs, which allow a person to rapidly identify and remedy malfunctions within the vehicle. Given the volume of data collected there are challenges in taking this data off the vehicle with the result that this processing of data for OBD purposes is conventionally done locally to, or within the vehicle itself. Examples include the use of hardware interfaces to data buses within the vehicle for allow third party diagnostic equipment access and process the data, or the use of on-vehicle processing of the data itself. This in itself can limit the level of utilization of this data and the present inventors have identified that this in itself can mean that vehicle data is not always used to its fullest extent to optimise the driving experience.

One reason why this pool of data is underutilised may be due to the cost of wireless connectivity. As a vehicle is designed to be in motion the use of cellular or wireless communications protocols are the most appropriate mechanism to remotely access on-vehicle data. However, sending large amounts of data over a cellular network is deemed cost-prohibitive. Automotive manufacturers are continuing to deploy more and more advanced computational hardware into the vehicle to process data locally. This is known as "edge processing" and entails doing as much data processing as possible in the vehicle without relying on external connectivity.

Another reason why relevant data might be underused may be linked to security and data privacy concerns. According to some sources, a connected vehicle may generate up to 30 terabytes of data per day. As much of this data may include personally identifiable data, the release of such information from the car could lead to significant issues for the manufacturer due to strict GDPR rules. Consequently, along with general driver sentiment it may be considered safer to heavily restrict the data transfer out of the car.

Notwithstanding these conventional prejudices, the present inventors have identified that if this on-vehicle data could be interfaced with driver specific data that it may be possible to provide more sophisticated real time data inputs to trigger routing decisions. In this way the present inventors have identified a need to collect and process data to improve an overall driving experience.

### Summary

Accordingly, a first embodiment of the application provides a system as defined in claim 1. Advantageous embodiments are provided in the dependent claims. An independent method is also provided.

### Brief Description Of The Drawings

The present application will now be described with reference to the accompanying drawings in which:
Figure 1 is a schematic showing a network architecture of a system in accordance with the present teaching
Figure 2 is an example of process engine functional components provided within the system of Figure 1.
Figure 3 is an example of an architecture per the present teaching that provides the system as an interface between a user of the system and other third party service providers
Figure 4 is a schematic how a single driver or user of the system can sequentially engage, or be associated, with different vehicles over time.
Figure 5 is a schematic how multiple different users of the system can engage, or be associated, with multiple different vehicles.
Figure 6 shows an example of a map overlay demonstrating how data collected by a system in accordance with the present teaching can be used to target specific vehicle/driver combinations based on their collated profile.
Figures 7 and 8 are exemplary graphical user interfaces showing typical registration screens that can be provided on an application executing on a mobile device of a user to facilitate user registration with a system in accordance with the present teaching.
Figure 9 shows an example of how different users of the system can be associated with different permission level or profile information.
Figures 10 to 12 are exemplary graphical user interfaces showing typical interface screens that can be provided on an application executing on a mobile device of a user to facilitate temporal association of a vehicle with a specific user in accordance with the present teaching.
Figure 13- 15 are examples of different human -machine- interfaces that can be displayed within a vehicle to convey navigation information to a user per the present teaching.
Figure 16 is an exemplary process flow sequence of a methodology employed in accordance with the present teaching.

### Detailed Description Of The Drawings

The present inventors have identified that individual users of a vehicle have specific personalised data associated with them. At the same time individual vehicles have specific vehicle data associated with them. Per the present invention, by collating the data from the individual users with data from the individual vehicles, it is possible to inform decisions on the routing of a vehicle that allows personalised optimization of the routing of the vehicle over and beyond routing that is triggered by one or either of the vehicle or the user. In effect, the use of data from both the user and the vehicle can actively allow for more intelligent navigation decisions.

The present inventors have identified that existing solutions draw on receiving data from the environment outside of the vehicle in order to make recommendations on matters of optimisation. For example, as discussed in the background section, an existing solution may warn the driver that the traffic on their usual route is likely to cause a delay before a predicted journey. However, this type of recommendation is driven solely from external factors - in this case the current traffic patterns at the time of navigation, and so does not factor in the needs of a specific driver/vehicle combination. Another example may be that traffic on a particular route is heavy, so a driver is directed to take another route with less congestion. These are evidently better than making navigation decisions in the blind, but what if this driver has a need which can only be fulfilled by taking the original route? Existing solutions that are driver specific are agnostic to the requirements of the vehicle within which the driver is travelling as such they have no way of knowing that the vehicle is in need of a tire change or has an anticipated future requirement for fuel. For example there is no determination that routing to a longer route that may avoid traffic may be inappropriate if the vehicle does not have sufficient fuel to traverse that route, and there are no fuel stations along the route.

At the same time existing solutions that are vehicle specific are agnostic to the requirements of the driver, and as such will suggest routes that are ignorant of the fact that the driver has availed of a discounted price on a carwash at a particular service provider, or indeed has a calendar event on their future schedule that requires travelling by a waypoint on the destination, and so will absorb the negative impact on their time in order to meet another more important need.

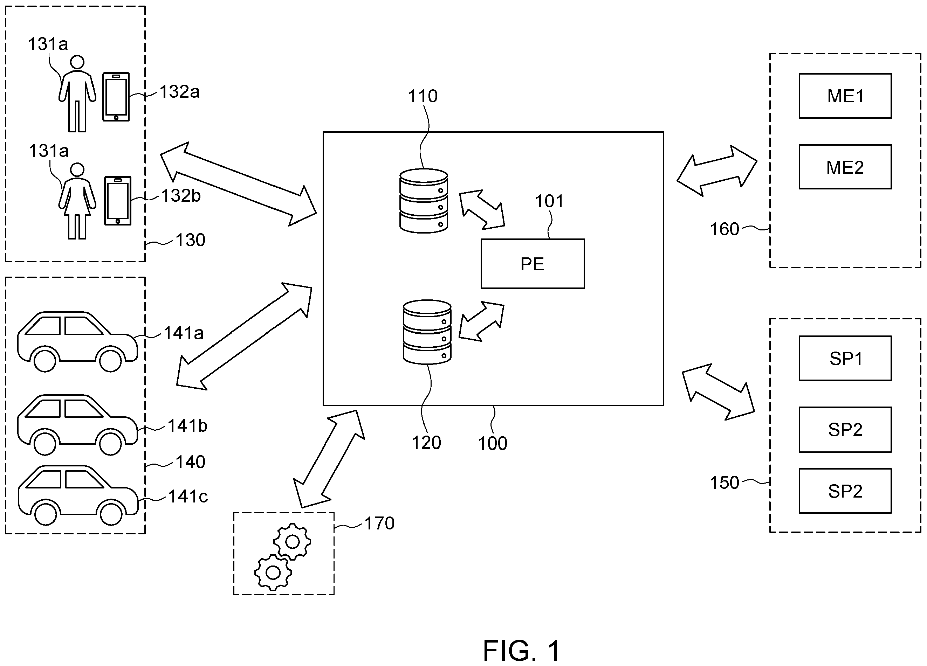

To address these shortcomings, a system 100 in accordance with the present teaching, an exemplary arrangement of which is shown in Figure 1, uses vehicle and driver-specific data to build an optimised travel program, that is based on both vehicle and driver specific data.

The system 100 is configured to maintain databases 110, 120 of sets of driver 130 and vehicle 140 data respectively. Within each set of data type, the system is configured to communicate independently with individual ones of the drivers 131a, 131b, and the vehicles 141a, 141b. Within the context of driver data, it will be appreciated that the system is configured to communicate with respective mobile devices 132a, 132b that are associated with specific drivers. In this way the mobile data that is retrieved from these devices is effectively a proxy for the data that is associated with the driver that is then associated with that data. The communication with the mobile devices can be effected using conventional mobile data communication protocols such as use of cellular communication paths or the like. Within the context of the vehicle communication, the system may advantageously make use of the MQTT (Message Queuing Telemetry Transport) mechanism which will be appreciated by those of ordinary skill as being an open OASIS and ISO standard (ISO/IEC 20922) lightweight, publish-subscribe network protocol that transports messages between connected devices. The MQTT publish/subscribe architecture has in recent years being adopted in many instances as a mechanism for connected devices and moving data from the device to the cloud. It will be appreciated that it usually runs over TCP/IP, however, any network protocol that provides ordered, lossless, bi-directional connections can support MQTT. Per the present teaching, a network server side MQTT broker can be associated with multiple MQTT clients, the respective vehicles that are associated with the system. The MQTT broker can be used to effectively route messaging between the system of the present teaching and vehicles that are enrolled with that system. It will be understood that different sets of vehicles- for examples vehicles associated with one manufacturer, may be associated with a different MQTT broker to vehicles of a different set- those associated with a different manufacturer. In this way the system is configured to associate any one vehicle registered to the system with an appropriate MQTT broker for that vehicle. Communications to that vehicle are then routed through the appropriate MQTT broker for that vehicle. It will be understood however that once configured, the delivery mechanism between the system 100 and the vehicles 140, or users 130 is effectively transparent to the end points of the communication path.

Each of the drivers and the vehicles are associated with a unique identifier within their respective data stores 110, 120. For the drivers this may be the IMSI of the mobile device 132a, 132b. For the vehicle this may be the unique vehicle identifier, for example the Vehicle Identification Number, VIN.

Within each data store 110, 120 of the user and vehicle respectively, the system includes a number of definable fields that collectively can be used to store data specific to each user or vehicle. Furthermore, that collection of fields collectively can be used to define profiles associated with each of the user and vehicle respectively. The data can be processed using a processing engine, PE, 101 that is show in the simplified schematic of Figure 1 as a single processing block. It will be appreciated however that per computing norms, that this processing functionality can be provided in one or more distributed computing components, each having one or more individual processors.

The system 100 provides an interface between vehicles and associated drivers of those vehicles. At the same time, it provides an interface between various service providers 150, shown here as exemplary three individual services provides SP1, SP2, SP3. Each of these service providers can engage with the system 100 to facilitate targeting of specific combinations vehicles and/or users depending on the profile defined as the target audience for that service provider. For example, SP1 may be a group of service stations that wishes to attract petrol cars as opposed to diesel cars. As the system stores details of the vehicles- for example that they are petrol as opposed to diesel as opposed to electric- it is possible for SP1 to define a profile of petrol-based vehicles that can be specifically targeted for messaging or promotions.

The system also has access to mapping functionality 160 which facilitates the provision of navigation information to users of the system. In the example of Figure 1, this mapping functionality is provided by two separate mapping engines ME1, ME2, which are each provided by a third-party mapping platform. It will be understood for example that access to, for example, Google Maps and Bing Maps is provided under license to third party users of that mapping software. In another example, a dedicated mapping platform can be integrated into the system itself.

It will be understood that generating directions from Point A to Point B just before departure is the traditional usage of navigation services. This type of usage is ideal for a single journey - the driver will be given the best route to achieve their short-term goal. In contrast to this traditional arrangement, instead of treating each journey as a single transaction with a start & end point, a system 100 per the present teaching is configured to create a fully optimised plan taking in all needs of the driver. In this way, a driver can be sure that their many needs will be met in the most balanced and optimised way possible, while still offering all the benefits of "just-in-time" routing.

It will be appreciated that the level of personalisation of a navigation system will depend on the granularity of the data that is stored per each user and in accordance with the present teaching, the user can choose how much of their own data to provide so they remain in control. As each of the vehicle and the user have independent connections to the system, it is possible to independently interrogate the users of the system and the vehicles of the system. In the same way that a user of the system may be provided with control over which data is collected and used by the system, similarly, vehicle operators can also define which data is collected and the frequency of that collection.

To populate the vehicle data store 120, the system is configured to support a variety of means for feeding data in real-time. A non-exhaustive list of supported data feeds includes;
- Real-time stream over multiple network protocols
- HTTP API GET/POST
- Data-store integration (relational, non-relational)
- File Import (Push/Pull)

For a specific vehicle to send data to the system 100 directly, the device must be configured to send data to a data ingestion endpoint. Alternatively, device data may be aggregated by an automotive OEM and sent to the system 100 in a batch pattern. The trade-off for moving to data aggregation models is a delay in processing time and therefore effectiveness of time-sensitive decisions. For example, a delay in processing a low fuel scenario could mean that the driver has made the refuelling decision before the system has received the data and as a result the vehicle data within the data store 120 is out of sync with the physical world.

There are broadly two categories of real-time data formats supported by the system 100.
- Raw Sensor Data
- Pre-processed Data

Raw Sensor Data refers to basic telemetry data which is collected at source and sent directly to the system. In this case, any logical calculations are done at "server-side" by the processing engine 101 of the system 100. Ingestion of Raw Sensor Data can be broadly approximated to high-volume simple data feeds. As will be appreciated by those skilled in the art the collection of data can be effected by a distributed scalable cloud-based ingestion engine which can support millions of devices sending simple telemetry messages. Once data has been loaded to the system, data processing is immediately performed over the most recent data, optionally merged with historical data for trend analysis. Rule evaluation is performed by the system to identify any needs detected by the data values.

A simple example is fuel level reporting. Raw Sensor Data contains a decimal value for current fuel tank level expressed as a percentage. A simple rule might be "Alert when fuel level drops below 20%". As the system ingests data values for fuel tank level, the value is compared to 20. If it is found to be below 20, a message is triggered in the system. This message may kick off a workstream that ultimately sends a notification to the driver that it is time to refuel.

It will be appreciated that dealing with Raw Sensor Data affords the most flexibility in terms of how the data is used, with the trade-off being a higher burden on the server-side data processing infrastructure.

The alternative to raw sensor data is pre-processed data, it will be appreciated in this context that there are varying degrees of pre-processing. For example, depending on vehicle function there may be a level of "edge processing" done on the vehicle itself. In such a scenario, the vehicle 141a, 141b generates and processes data locally. Only when the local system decides that there is a need to send data will data be passed to the server-side. There are two possibilities covered in this scenario.

*The vehicle only sends materialised needs.*

In this scenario, all processing logic is done on the vehicle. Only when a decision is made will the vehicle (or component responsible) send a data message to the remote system 100. The data message sent is limited to the request for service. A positive effect of using this pattern is the reduction of load at the server-side. A vastly lower number of messages will be received, and the messages that are received are likely priority service requests which will lead to value creation. A negative of this scenario is that there is limited data available to run complex analysis on - if the logic in the vehicle fails to identify a need, the system 100 does not have enough data to identify and notify of that need.

*The vehicle sends a data intermediate.*

This may consist of partially processed data - or may include a portion of data required to identify a need. Reasons for this could be a timing factor - for example, current state or delta difference will be transmitted "every X minutes". Other reasons for minimising the data transferred may be cost concerns (using cellular data coverage), or device restrictions (sufficient bandwidth is not available to send a more frequent data stream).

### Processing Data

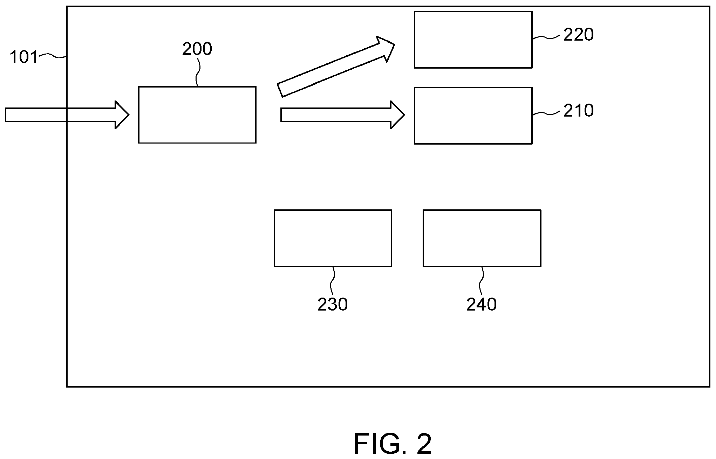

In either the processing of raw data or pre-processed data, once data has been ingested by the system 100, it is immediately processed through a number of stages. Figure 2 shows exemplary components of the processing engine 101. When vehicle telemetry data is received from a vehicle, the telemetry data is immediately matched with relevant driver data from a known driver-vehicle assignment. This can be achieved by the driver associating themselves with one or more specific vehicles through use of an enrolment process- such as will be discussed below through an APP executing on the mobile device that is associated with the driver. This means that all data processing is executed with the benefit of both Driver & Vehicle data available for evaluation.

The first stage is known as the Rule Engine 200. The is responsible for testing new data against a pre-defined rule. In its simplest form, each rule can evaluate to **True, False** or **Unknown.** A *Rule* is a simple statement in the form of "**If this then that**". When the rule is evaluated to **True,** this means that the system contains the information required to move data processing forward. For example, "*If Fuel Level drops below 20%, send an Alert*"*.* The data message is then passed on to the Analytics data store 210.

When the rule has evaluated to **Unknown**, the corresponding data is stored in a transient data store 220 for analysis. Reasons why this may happen are that multiple pieces of data are required in order to evaluate the rule. An example may be a rule for evaluating speed violations. One data message received may include the current speed, but the location may be included in a separate data message. In order to evaluate speed violations, the system must be able to evaluate "*If the speed on a certain road is greater than X kmph then Alert*"*.* So, the system must ensure that it has received both data messages required to process this rule.

When the rule is evaluated to **No**, the data is moved straight to the Analytic data store 210. The reason for keeping the data is to perform analysis on all data collected combined. In this way, patterns can be observed and reported on, but crucially the system will learn to identify "missing" rules. A missing rule is defined as a scenario which has presented itself in the data set but is not currently evaluated by the Rule Engine 200.

An example might be a driver with zero current rules active, though data is flowing into the system. The driver commutes between home and office every day. Based on tracking historical routes used by the driver, as extracted from the telemetry data that is received into the system which provides correlation between actual driver usage of the vehicle, the system can identify that this driver stops at one of three fuel stations in close proximity to their home each week, where the fuel tank is filled to over 95%. The historical routes used by the actual driver can be authenticated as being properly assigned to that driver by cross-correlating the vehicle telemetry data with cellular network data for the particular mobile device that is enrolled with and associated with the driver. It will be appreciated that usage of a mobile device within a mobile telecommunication network provides a footprint of the geographical journeys undertaken by a user of the mobile device- as detailed elsewhere in this application, the mobile device data provides a proxy to, and insight of, the actual driver activity.

Using the driver and vehicle data, the system can observe that there is no set fuel tank level that these visits take place. Sometimes the tank is at 40%, sometimes at 60%. It will be appreciated that as the telemetry data for any one usage of a vehicle is associated with a driver for that usage, that the system can advantageously distinguish between different driver usage of the same vehicle. In a scenario for example where one vehicle is regularly driven by Driver A and Driver B, but fuelling is done exclusively by Driver A, then only Driver A should receive advice on refuelling.

Further analysis of the area shows that the driver chooses the cheapest of the three over 75% of the time. In this way the system is configured to have learned in this scenario that the driver is motivated primarily by price of fuel, in their local area, and rather than the fuel tank level being the trigger to visit the fuel station, this driver uses the current price of fuel to decide when to visit. The "missing rule" in this scenario might be "*If the fuel tank level is less than 60% and the price of petrol at one of my favoured stations is below the area 3-day average, send a notification to the driver*"*.*

Per the present teaching, the Rule Engine is extensible and supports data ingestion from any source. Though this may be directly from a vehicle (device-level), it may also be fed aggregated data, or the product of upstream computation. Figure 1 for example show how a data aggregator 170 can also provide a feed into the system 100. It will be appreciated that when the data is actively being received from a vehicle that is currently been driven that the system is configured to concurrently extract driver specific data from the vehicle specific telemetry data - each being stored in a respective data store 110, 120. In this way a current driver vehicle assignment is reported through a single data channel, but driver and vehicle specific data can be extracted and independently interrogated- fed into the processing engine 101 for subsequent usage. For example, this data can then be used to provide driver-centric (an unbroken history of the driver regardless of how many vehicles they use), or vehicle-centric (an unbroken history of the vehicle regardless of how many drivers utilise that vehicle) reporting. In this way, for example, if the same vehicle is driven on separate occasions by Driver A and Driver B, the current telemetry data that is received from a journey associated with Driver A, can be used to inform navigation decisions for the next journey that is determined to be driven by Driver B.

In this way, the Rule Engine 200 can also utilised by predictive and prescriptive components of the system based on complex data analysis. An example is that an AI model engine 230 may be configured to interface with one or more or the transient data store 220, the analytical data store 210, and the rules engine 200. The AI model engine can utilises the data within each of the other system components to build data patterns over a broad time-range. It will be appreciated that this does not conform to the real-time data ingestion model described thus far. However, the output of the AI mode engine 230 may utilise the Rule Engine 200 functionality to govern the final part of the workflow. The telemetry data includes, based on vehicle sensors located within the vehicle, what are projected vehicle needs to maintain vehicle performance and/or operation. For example based on a fuel sensor, low fuel will be identifiable. This need can be used as an input for route planning- to ensure that the vehicle is routed to a fuel station in sufficient time to allow a refuelling of the vehicle for refuelling purposes. Another example is for instance, if the AI model engine 230 analyses a data set, and identifies that the Vehicle needs maintenance, it will make a message available to the Rule Engine 200 indicating that maintenance is required. The role of the Rule Engine is to test if it is an appropriate time to send a notification to the driver. The rule might take the form "*If the AI model engine 230 has indicated a need for maintenance AND a driver is currently in the vehicle then notify the driver*"*.* It will be understood that an appropriate time can depend on the nature of the messaging being delivered - for example - if the use-case is a non-realtime requirement like "maintenance required", "Appropriate Time" may translate to "Driver is not currently driving", and the target device for notification is a mobile device associated with that driver.

It will be understood that use of an AI model engine 230 is one example of a processing of the data to provide informed navigation choices to a user of a vehicle per the present teaching. Figure 2 also shows another component of the processing engine 100, in this case a predictive analysis engine 240 which is configured to use the both current and historical data ingested into the system to effect a predictive analysis of for example when a vehicle is likely to be active and the likely destination. Whilst shown in this schematic as a separate component to the AI model engine 230, it will be appreciated that input of data into a processing engine that is configured to effect an output which is indicative of a future location of a vehicle may also make use of machine-learning and artificial intelligence technology.

A simple example of this is the daily commuter. Through analysis of the daily patterns of a vehicle/driver, patterns can be observed where a likely home (start point, residential area, vehicle parked overnight) and office (business district, car parked on-street, working hours, weekdays) can be inferred. The Predictive Analysis engine 240 can use this pattern-recognised data along with the recent data collected from the vehicle to begin planning the future for the vehicle. In this example, the assumption is that the system will process this data analysis while the car is not moving, in other words "parked for the night". In this way the predictive analysis engine is configured to generate the predictive analysis output during time periods when the vehicle is not operating.

It will be appreciated however that time of day is not a constraint as the system will operate 24/7, for the example here the scenario will dictate that the vehicle is stationary in a residential driveway from Monday to Friday, 7PM to 8AM each day. This suggests an 11-hour "active" day for the vehicle where it will experience Trip A - From Home to Office at 8AM, and a Trip B - From Office to Home at 6PM. With this information available to the system, the next step is to look at the current state of the vehicle. This data has been collected and is available in the analytics store 210.

The Predictive Analytics or Analysis Engine 240 can be configured to use the historical patterns along with the current state to predict the needs of the vehicle for the following active day. For example, a rule in the system states "If the fuel tank level is below 30%, notify the driver", but the vehicle reaches home with 35% fuel tank level. Consequently, the Rule Engine 200 has not triggered a notification.

However, using the data analysed to date, the system knows that the vehicle will use 10% of the onboard fuel on the next day's Trip A - From Home to Office at 8AM. In this way the predictive engine 240 can predict that the Rule will trigger while the vehicle is midway through the trip. Mindful that notifying a driver at the mid-point of their journey may be inconvenient, and any routing decisions would likely be inefficient as the options for fuel station will be limited by current location, the system instead predicts the needs of the driver/vehicle ahead of time and send the notification before Trip A begins. This allows the system to best optimise for the entire day. For example, given usual traffic conditions, the system may advise the driver to leave the house 5 minutes early and stop at the best available fuel station (based on current price, time required to get there, distance outside the most direct route and any other variables). For vehicles with multiple needs, for example tire balancing and fuel, the system can advise the driver on the most efficient way to satisfy both needs, spread over Trip A and Trip B. The solution may consist of "Fuel on the way to work, balance tires on the way home from work".

Predicting these needs is preferentially done offline when the vehicle is inactive, as the intent is to compute a navigation route and provide that route to the driver before the journey is initiated. It will be appreciated however that not all decisions need to be made - for instance, there may be two fuel stations of equal suitability and the system will wait until just before departure time to decide on the best option based on current fuel price and traffic conditions. This determination or prioritisation can be effected using, for example, a custom cost-based optimisation method to make decisions. This can used to balance the demands on the system 100 while avoiding delays to the driver. It will be appreciated that given the depth of data that can be analysed from the profiles of each of the driver/user and the vehicle that there are a given set of needs that can be fulfilled with the result that there may be many possible solutions. The system per the present teaching is configured to evaluate multiple options before deciding on the "best" option. In this way the the processing engine is configured to use the predictive analysis output as one of a plurality of inputs in an optimisation process to generate the future navigation route. A future navigation route is, in this context, a planned route to facilitate travel between two or more geographical locations. The route will include details on roads that can be used in conducting the actual journey that corresponds to the journey between the two or more geographical locations.

To develop on the fuel example, outlined above and assuming that the predictive processing is effected when the vehicle is not moving, the system is configured to use the previous history of the vehicle, to determine that it is likely to be stationary in this position (residential driveway) for the next 11 hours. The system 100 has received data that identifies that the vehicle currently has 35% in the fuel tank, and has processed data to predict that the next trip (Home to Office) will cause that level to drop under the alert threshold. In this scenario, start and end points are known. These start and end points are, it will be appreciated, generated at least partially on the basis of historical activity of the specific combination of both the anticipated driver of the vehicle and the vehicle itself. Based on mapping algorithm inputs that can be derived, for example, from the mapping engines ME1, ME2, the system can identify that in a reasonable radius from the straight route, there are five fuel stations.

One of those stations is known to be on a busy stretch of road, so is eliminated as an option. The system will then set a routing waypoint for each fuel station location. The fuel station waypoints are in this instance identified on the basis that the vehicle will require fuel, i.e data specific to the vehicle. This produces four candidate routes, each with the same start and end, each with a different waypoint set for corresponding fuel court. Each candidate route can then be input back to one or more of the configured mapping engines, ME1, ME2 for evaluation. As each route is returned, the route is considered for selection. Each returned route is compared to any historical route chosen, and the historical activity of the specific vehicle and driver combination in selecting a first route over a second route can be used as a weighting factor, and weighted for time, distance, and price. For example it may be identified that a particular driver has a preference for usage of a particular fuel station and as such the data specific to the driver is used as an input in determining the future navigation route. Depending on the number of candidate routes, the time required to return from the provider and the relative load on the system, a selection may be made on a "*good enough*" basis. This may occur before all routes have been considered. In this case, the system deems that it is unlikely to significantly improve on the current option, so the remaining candidate routes are abandoned, and the workflow continues based on the current selection. If there is no clear "winner" in this selection process - for example if fuel prices are missing or unknown at the time of processing, multiple candidate routes may be cached by the system server-side. The system will then wait for a later trigger to perform the final selection. Optional triggers to do this might be timer-based - for example 10 minutes before predicted departure time, or on first ignition event received (when the vehicle is started). In such a scenario, the system will still employ a cost-based approach to selection.

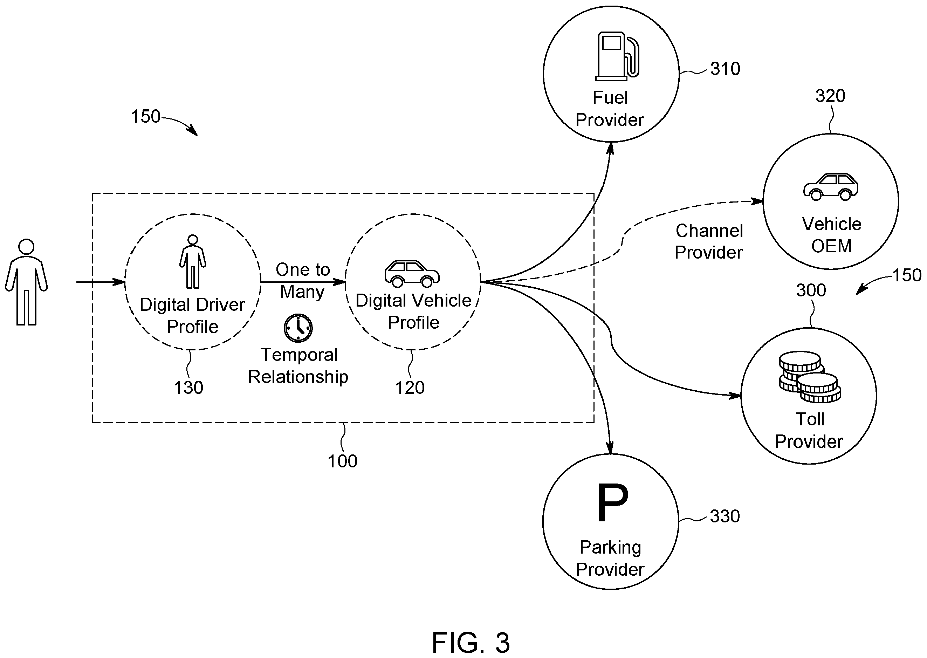

It will be appreciated in this way that the system per the present teaching analyses data from each of a vehicle and associated driver to create a personalised set of recommendations. By creating a "closed feedback loop", data generated by the vehicle is used to provide personalised services to the driver. This is delivered via a flexible platform that can provide communication to a driver of a vehicle through one or both of an in-vehicle informatics system or through the mobile device that is associated with the user. It will be understood that the personalisation of a navigation route can depend based on a number of factors including the specifics of the service provider SP1, SP2 etc that were discussed with refence to Figure 1. Figure 3 shows an example of how each of these service providers can interface with the driver of a vehicle through a system per the present teaching. Recognising that a vehicle can have multiple drivers, the driver profile can be considered as having a temporal relationship with the vehicle. In this definition of the parameters that inform the rules engine, the vehicle requirements are statically defined, for example fuel level, service requirements (tyres, oil etc) whereas the driver requirements are dependent on historical and predicted driver behaviour and the services that are associated with that driver. In a traditional model, service provision takes place directly between individual service providers and the driver of the vehicle. As outlined in the schematic of Figure 3, per the present teaching the system 100 provides the sole interface to the driver. In this way each of the service providers 150, in this example the vehicle manufacturer (the automotive OEM) 300, and other service providers such as fuel 310, toll 320 , and parking 330 providers are not provided with a direct access to the driver. The driver and vehicle data is maintained within the system 100 of the present teaching. The access to and security of that data is controlled by the system. In this way the vehicle manufacturer can interface with data that is specific to their vehicles but also the drivers of those vehicles, but can only access that data that is facilitated by the data policy that is implemented by the system of the present invention. By including the OEM 300 as a channel partner, the system 100 allows for first-party & third-party services to be directly integrated through the user-interface of the car. To ensure data integrity and protection of personalised information, all data to service providers is anonymised such that the OEM Channel Partner will know the Vehicle Profile, but no sensitive driver information will be distributed. This can be achieved for example by sending driver reference data to the OEM using secure data transfer protocols, again prioritising the protection of sensitive driver data.

It will also be appreciated that by providing individual connections between a driver, a vehicle and one or more service providers that the existence of this relationship can be reflected in the data that is associated with the driver and/or vehicle. In this way this relationship- or absence of same- can be used as a feed into the rules engine that will then facilitate the selection of an appropriate personalised route for any one journey taken by a specific driver/vehicle combination. Such use can, for example, be effected by attributing specific weights to specific relationships and using those in the route selection algorithm. For example, when a driver has an active relationship with a specific fuel provider, they can customise the weighting of that provider in the system. A driver may choose to simply prefer their chosen provider in a situation where there are similar offers available in the area from multiple service providers, or the driver may update their profile such that the system is configured to ensure that only the chosen service provider should be selected for any one specific driver/vehicle route planning. It will be appreciated that as each of driver and vehicle data is fed as an input into a particular route planning process, that in scenarios where a single vehicle is shared between multiple drivers that the selection of appropriate waypoints in the same journey between points A and B in the same vehicle may vary dependent on the specifics of the driver immediately associated with the vehicle.

In this way, the system of the present teaching is configured to generate navigation routes that are optimised for both user and vehicle specific data. To effect this generation, the processing engine 101 is configured to input data from each of the user and the vehicle data stores into a model. The modelling provides a differentiation between driver and vehicle and because the vehicle and driver are distinct entities, the system can deal with concerns specific to either and can apply weightings in that model that are associated with individual data fields within each of the user and vehicle specific data set. For example, a vehicle needs tires in good condition - if the driver is not planning to use the vehicle, there is no driver need present. If a driver needs to travel to their office, they may have many options for transport. Until the driver has selected a specific available vehicle, the driver's needs, and vehicles needs are distinct concerns. Once the driver and vehicle combination is determined, then the final route selection can be optimised based on association of specific service providers with specific ones of the drivers and vehicles.

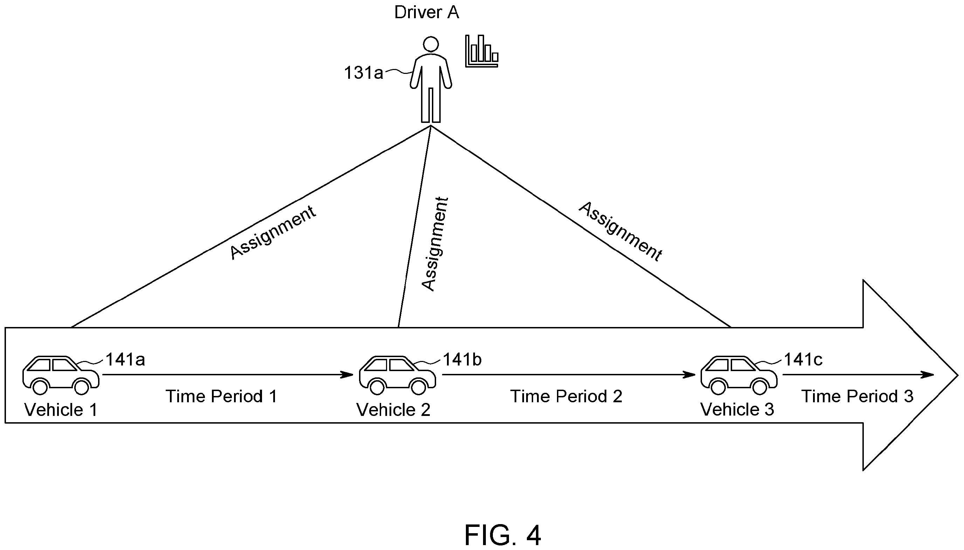

In this way, a driver and their needs are mobile and not tied to any one vehicle. One use-case that this enables is car-sharing - where a driver's routine has no permanent relationship with a specific vehicle. Instead a driver may utilise many vehicles, often in an unpredictable way - depending on share-car availability, location and convenience. Figure 4 shows an example of such a scenario where a driver 130 can interface with three separate vehicles 141a, 141b, 141c. In each use case the combination of driver vehicle is different- time period 1 (130, 141a), time period 2 (130, 141b), and time period 3 (130, 141c). As the system per the present teaching stores data specific to the users and the vehicles separately, the route planning for each of the three time periods may use different parameters in optimisation, irrespective of the fact that the drivers are the same. In this way, a system per the present teaching can enable the optimisation of the driver's needs - even when the needs of the vehicle are irrelevant. This becomes even more powerful when a driver uses a mix of personal and car-share vehicles.

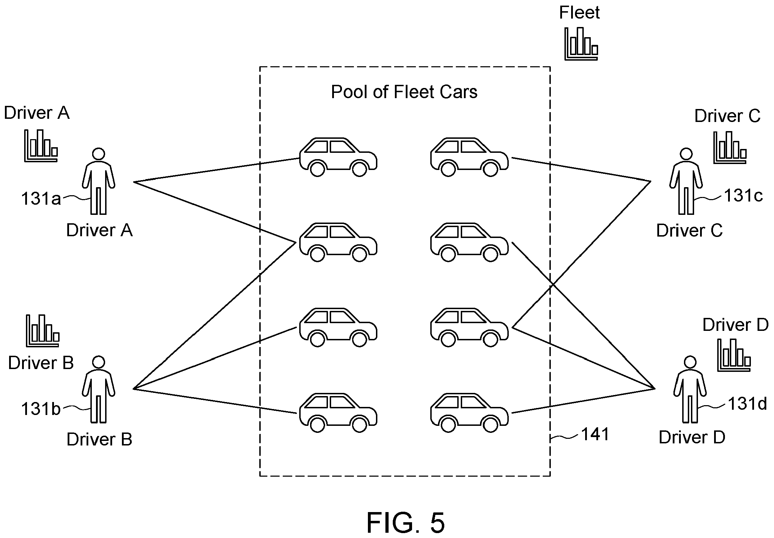

Figure 5 shows an example of how a system per the present teaching can facilitate the optimisation of journeys for driver and vehicle combinations that are not determined *a priori.* For a driver who allows their vehicle to be shared - that is driven by other drivers on a permanent or random manner - the driver (in this case the owner of the vehicle 141 which can include a fleet of separate vehicles) can keep track of the vehicle needs - regardless of the current driver. Examples may be tire change, service etc. Each of the drivers 131a, 131b, 1313c, 131d are each associated with a specific profile within the system. Any journey that is undertaken by a specific driver and vehicle combination can be used to update data relative to each of the driver and vehicle separately. In this way the system 100 can update driver preferences and vehicle requirements and can use that data separately in different fashion. For example, the vehicle data requirements can be consolidated into maintenance reports for the fleet 141, where the driver preferences can be used to update route planning for future journeys for that driver.

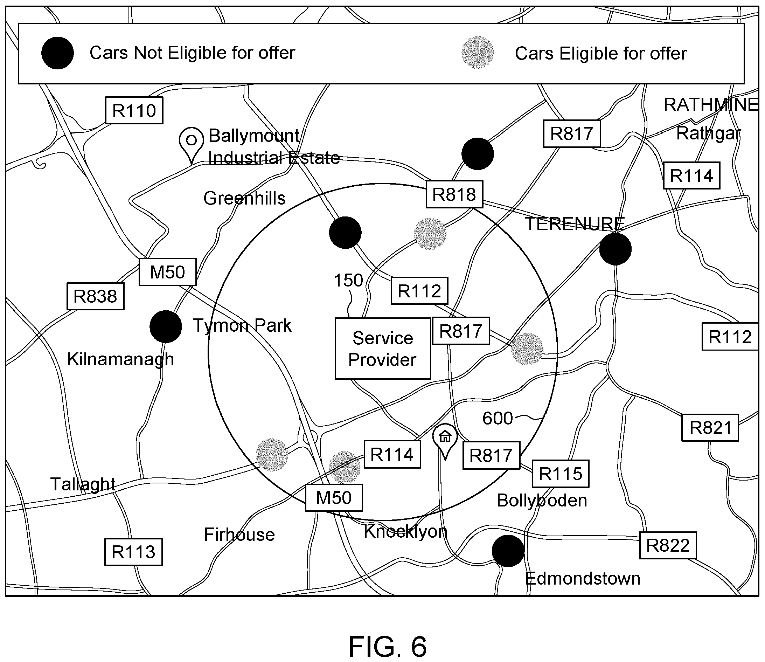

As the system is configured to concurrently process data relative to a plurality of distinct driver and vehicle combinations, at any one point in time the system is aware of the current journeys of large numbers of specific combinations of vehicles in any one geographical area. Figure 6 shows an example of how this data set may be used to effect service broadcast messages to specific vehicle/driver combinations at any one time and within any one geographical area. In this example, a specific service provider 150 that has association with specific vehicles and/or drivers wishes to selectively message a target audience who are currently within a defined area 600 about that that service provider 150. By inputting the criteria as a filter into the system 100, the system can then use that criteria to first identify vehicles currently on the move within a geographical area that matches that criteria, and then by using the unique identifier of either or/both the mobile device 132 that is associated with the drivers of those vehicles or the vehicle identifier itself can then direct a message that is displayed on the mobile device or within the vehicle informatics system. An example of Service Offering Broadcast might be;
**From:** Fuel Provider X at Address ABC, Dublin 16
**To:** All vehicles which
   ∘ Are within a 2KM radius
   ∘ Are currently moving
   ∘ Are Petrol-powered cars
   ∘ Have under 60% Fuel Tank Level

A notification will be broadcast to all vehicles in the area which meet the specified criteria. This notification will be shown on the HMI, delivered as an informational message.

Other components of the message should include the incentive being offered to the driver and any conditions attached;
∘ X% off a carwash
∘ If the visit is in next 60 minutes

As dictated by the conditions, the time-to-live of these messages is short and messages are only broadcast to vehicles which have ample time to react to the offer. Once a driver decides to accept an offer, there is nothing required but to travel to the Service Provider address. The navigation system can be updated to guide the driver as required.

Such a broadcast message can be based on a tracking of the vehicle using the data received from the vehicle, wherein the system is configured to recognise the vehicle as it enters the location of the Service Provider and that the driver is eligible for the relevant discounted service. The system can be further configured to provide the Service Provider with one or more required interfaces, for example a web browser interface, to enter broadcast criteria and conditions. Using anonymised data, the system can then offer insights on the historic and current flow of traffic in the area to aid the Service Provider in creating an effective broadcast.

For example, the system may highlight to the Service Provider that there are a statistically high number of premium petrol cars active in the area which may respond to a discounted price on premium petrol. As with the driver-oriented functionality, the drivers' data remains anonymous to the Service Provider as broadcasts are handled by the system. It will be appreciated that in preferred configurations of the system, users of the system have full control over setting their marketing preferences - including Service Offering Broadcast. It will be appreciated that per GDPR requirements, a driver can fully opt out, but for a driver that wants to customise their experience, the system allows them to drill into the types of offer they wish to be included in.

For example, a driver may decide that they are interested in discounts on petrol prices, but other offers like free coffee or carwash do not appeal to them and so they will be excluded from any Service Offering Broadcast which does not conform to their choices. Over time, the system can use data received int the system to continue to evolve using deep analysis and extending to AI routines to increase the effectiveness of Service Offering Broadcasts. For example, the AI engine 230 can be used to identify drivers who may be a good match for offers based on their preferences, but also on their driving habits. This may manifest in the system identifying a driver that is slightly out of range of a scheduled broadcast, and nudging that driver to consider making a slight change to their plan, thus benefitting from an incentive which the system identifies as valued by the driver.

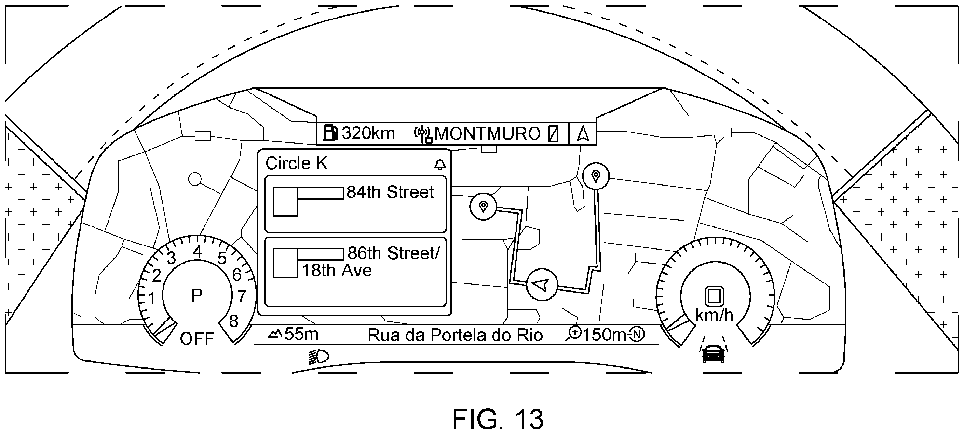

It will be appreciated that the benefits of the present teaching are based on a concept of connected driver. At any one time there is a temporal relationship, which may be current or projected, between a specific driver and a specific vehicle. Services are enabled and supplied through the car but associated only with the driver. Through the driver-vehicle association, requests and responses can be exchanged without the need to supply personally identifiable information about the driver. As the vehicle consumes services, the service provider does not have any visibility of the Driver Profile as the vehicle is the consumer in this model. It will be appreciated however that within the context of the specific vehicle and driver combination that a driver, having enrolled within the provisions of the system, can configure the system to provide messaging directly to a mobile device associated with that driver, and also to provide messages to the driver through the in-vehicle navigation system. It will be appreciated that the communication channel may vary dependent on the nature of the communication itself. For example, in the even that there is communication of possible waypoints within a selected journey that is enroute it is appropriate to relay that communication to the in-vehicle navigation system- for example Figure 13. However for notifications that may affect a future journey, the driver may receive notifications on their mobile device. For example a message of the type "We believe you will leave for the office in 5 minutes. You should refuel" should be relayed to the driver before they are in the vehicle and should go to their mobile device. The distinction is important where there are multiple drivers of a car. Only the driver who is going to leave for the office in 5 minutes should receive the notification, and per the present teaching and the rules engine that processes both historical data and models future activities it is possible to provide this level of differentiation.

It will be appreciated that a system per the present teaching makes use of data that is specific to individual users of the system and individual vehicles that are used by those users. By identifying within the data feed received from any one vehicle data that is specific to the current driver of that vehicle, the system is configured to parse and separate the driver specific information from the vehicle specific information. The driver can be identified by having a pre-association of the vehicle with particular drivers and then making an assumption that current usage of the vehicle is usage of that vehicle by the associated driver. This assumption may, in certain scenarios, be confirmed by independently examining the geographical journeys of the driver as relayed by the cellular mobile traffic that is associated with the mobile device that is associated with that driver.

Each of these two data sets can then be used independently to update profiles of each of the driver and vehicle. The stored profiles can then be used to intelligently inform and feed into optimised route planning within a navigation requirements that can be weighted on preferences of each of the driver and/or vehicle.

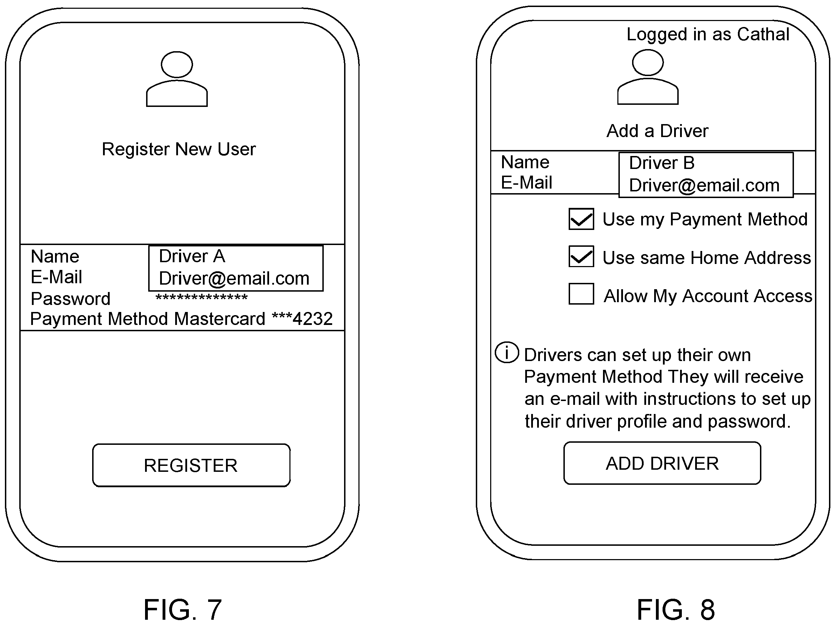

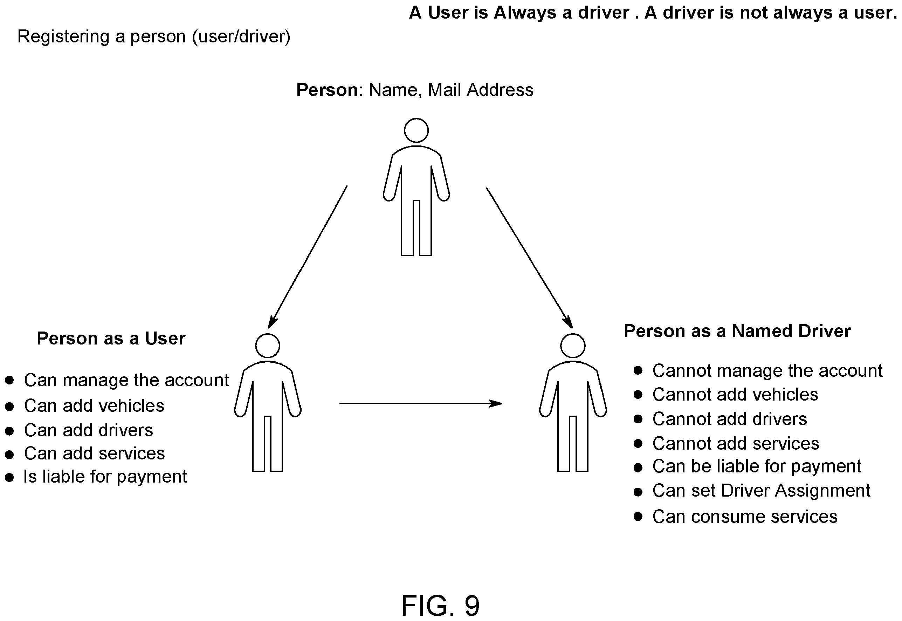

In order to uniquely identify a user within the system, it is necessary for the user to first enrol with the system. This can be done through, for example a web browser interface where the user is provided with a unique identifier and password. Typically however, and taking advantage of mobile device technology, the user can download an application which is then executable on their mobile device. Figures 7 and 8 should two examples of screen shots that are representative of the type of user interface that might be provided to a user as part of an application executing on their device. In the example of Figure 7, a new user Driver A wishes to register with the system - they provide necessary information and that data is then stored within the system, together with the unique identifier of the mobile device from which this request originated. Having created an account within the system, the user can then use that account for their own driving, or can associate other drivers with that account- in this example of Figure 8, a second driver Driver B is added. It will be appreciated that such an arrangement is useful in the context where two or more users from the same household may want to use the same vehicle. Per the arrangement of Figure 9, each of the users in the system can be associated with different privileges and or characteristics.

Once a driver is enrolled in the system it is then necessary to connect the driver to a vehicle. As the system considers the connection to be a temporal as opposed to permanent connection, the [**Driver**] to [**Vehicle**] Between [**Start Time**] & [**End Time**] relationship will exist only in the system, albeit as will be understood from the above, the system is configured to effect a predicted future connection between specific sets of drivers and associated vehicles. However, based on this concept of a temporal relationship there is a preferential need within the context of the present teaching to provide an efficient way to define this temporal relationship between any one journey **Start Time** and **End Time**. It will be appreciated that there are many ways to trigger such an association and whilst the system is agnostic to how this relationship is created, there are several options for creation. In each scenario, this method will be used also as one factor to authenticate payments through the system. Additionally, each scenario has multiple options for "closing off" the temporal relationship - for example, Engine off, NFC "swipe out" etc.

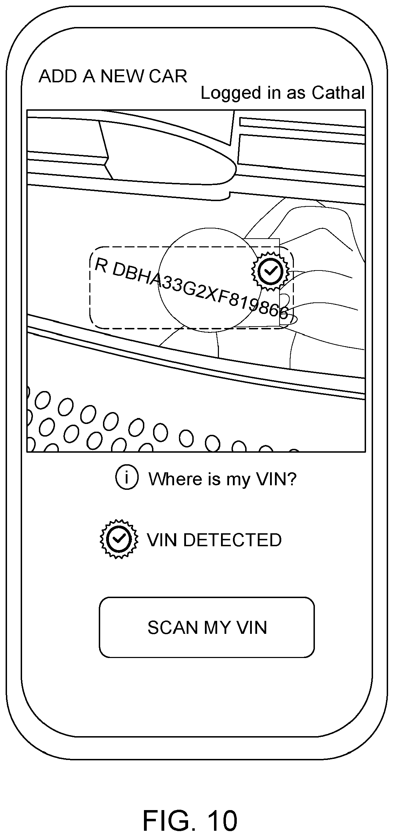

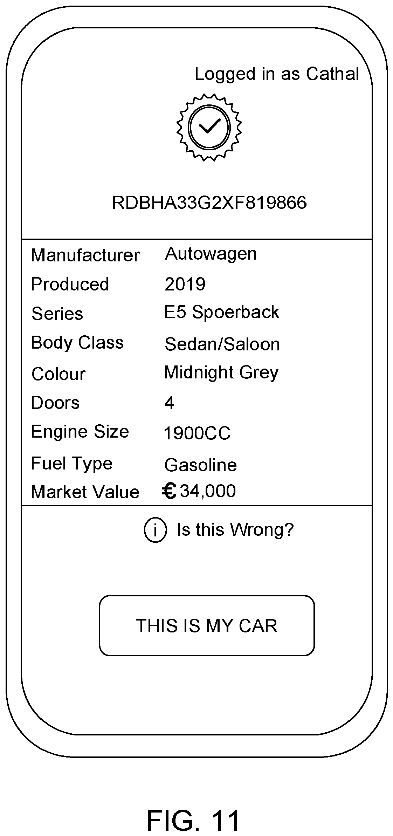

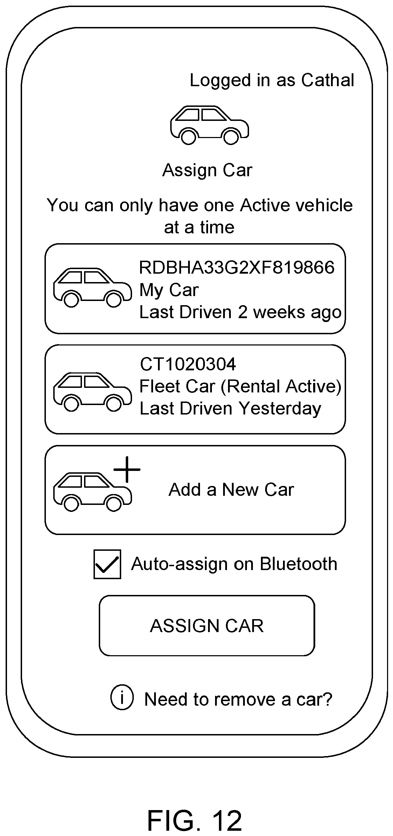

A non-exhaustive list of options for authentication may be;
i) Biometric Authentication (Built-in) - using a Biometric Reader, a driver can be verified at point of entry to the vehicle by supplying a fingerprint or retinal scan. This Biometric Reader should be built into the car, therefore linked only with that car.
ii) Biometric Authentication (Proxy Device) - In this case, a proxy device (for example, a Phone) is used as Biometric Reader to verify the driver through fingerprint or retinal scan. Once the device has authenticated the driver, the device must then be paired with the vehicle. This can be achieved by connecting the device to the vehicle over Bluetooth or by displaying a QR code in the main human interface in the car. Once scanned, this QR code will trigger communication with the system, supplying the identity of the vehicle and driver.
iii) NFC Tag/Fob - a unique tag can be registered and issued to the driver. Upon entering a vehicle with a supported NFC tag reader, the driver will scan their unique tag. The vehicle will then initiate communication with the system to create the relationship.
iv) Username/Password - A traditional method of authentication using a unique Username/Password combination, with multi-factor option using the system to send SMS to a registered phone number. The Human-Machine-Interface (HMI) of the vehicle would provide means of entry.
v) Use of the application that is executing on the device of the user. Figures 10 to 12 show example of the user interface that can be presented to a user who wishes to add a vehicle. On the first use of a vehicle the application can be configured to associate a specific vehicle with a specific user. Figure 10 shows how the application can interface with the mobile device camera to effect a scanning of the unique vehicle identification number (VIN). Having scanned the VIN, the application is configured to interface with the system to use the identified VIN in a VIN look up to retrieve the vehicle details. This can be done in accordance with conventional VIN look up techniques and allow a population of data fields within the application with specifics of the retrieved details- Figure 11. Having confirmed that the retrieved vehicle details are correct- "THIS IS MY CAR", the user interface is then updated to allow the user assign one of the stored vehicles for this user profile for this specific journey- Figure 12. This screen can be the default launch screen for future journeys such that on initiating a journey the user activates their app and can select, in this example, one of two already registered vehicles, or can select a new vehicle. In the event that the vehicle to be used is already present, the user selects that vehicle and confirms that selection through "assign car".

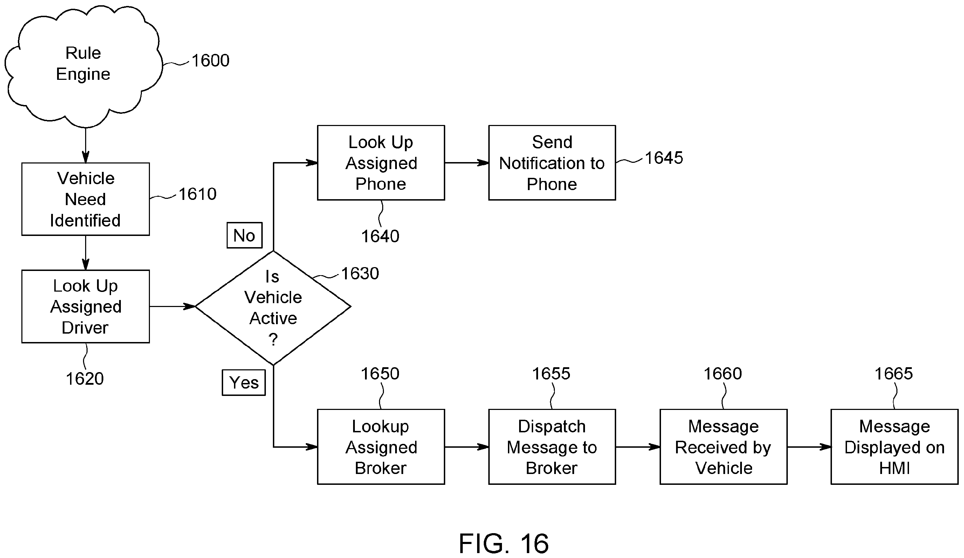

Figure 16 is a schematic of a messaging sequence for delivery of messages to one or both of a device of in vehicle human-machine-interface, HMI, such as the displays that were exemplified with reference to Figures 13-15 above. Having processed data, the Rule Engine 1600 determines a need to communicate a message about a specific vehicle to that vehicle. The first step is a database lookup of the identification of the vehicle (step 1610). Per the present teaching for any one communication to a specific vehicle is associated with a specific user or driver of that vehicle, so there is a need to associate for this particular communication the appropriate driver, step 1620. A determination- typically effected using recent telemetry data received from the vehicle- is made as to whether the vehicle is currently active- Step 1630. In the instance that the vehicle is not active- for example the vehicle is parked and the communication pertains to a future journey of the vehicle, for example the commute journey of the following morning- then it is determined that it is appropriate to route messages to a mobile device associated with the determined driver. This requires a look-up of that device, Step 1640, and then the transmission of a message to that device- Step 1645.

In the event that there is current temporal association between the driver and the vehicle- for example there is an active journey detected- then the system is configured to effect the communication directly to the vehicle. Per the previously discussed use of MQTT protocols, this can be effected by initially looking up the assigned MQTT broker for that vehicle, Step 1650, and dispatching a message to the MQTT broker, Step 1655. The MQTT broker will then route the message to its identified MQTT client- the vehicle, Step 1660. Once received in the vehicle the in-vehicle HMI can then effect a processing of that message and a display on the HMI interface Step, 1665.

Having confirmed driver and vehicle association, the system 100 is then configured to interface directly with the human-machine-interface, HMI, or informatics system of the vehicle. It will be understood that the display on the device of the user will typically require the use of an APP that is installed on the device. The use of APPs that execute on ANDROID or IOS type of devices for interfacing with remote services will be understood by those of ordinary skill. Similarly, the configuration of the HMI within the vehicle to effect a processing and display of messaging with as system per the present teaching will typically require a configuration of that HMI. This can be achieved through OEM installation at manufacture or can it be installed through for example firmware upgrades including the installation of bespoke software that is specific to the present system and is executable locally within the vehicle. It will be appreciated that such an interface requires access to existing informatics systems deployed within the vehicle. This can be effected in a combination of both hardware and software functionality and given its direct interface with the operation of the vehicle requires vehicle manufacturer cooperation.

In a preferred deployment the integration of communication and display software that facilitates the provision of data to the system 100 and receives commands for displaying of navigation data provided by the system are provided following a fully virtualised approach. For both telematic (ie data feeds out) and for the human interface (UI), the software functionality that is deployed to the vehicles is designed to be internally scalable according to the computing environment onto which it is deployed. This can be achieved by a combination of modular deployment, allowing a "least-required" subset of software, and containerisation- which will be understood as being a virtualisation technique which allows full encapsulation of software and all its dependencies, thus allowing predictable functionality across any supporting infrastructure.

It will be appreciated that there are many competing demands for computing power inside a vehicle's many subsystems. The present inventors have identified this constraint and have identified that it is possible to achieve the necessary communication required to implement the provision of navigation information by migrating a simple telemetry application from the main operating system of the vehicle to the modem operating system which is conventionally deployed within modern connected vehicles. It will be appreciated that the functionality of a modem is constrained by the resources allocated to it, so commands must be simplified and reduced to the minimum acceptable footprint. As such at least a portion of the overall functionality of the system can be executed by the modem operating system. By adopting a feature-driven software deployment model along with encapsulated software containers, the vehicle functionality of a system per the present teaching can be implemented through software that is executable on existing hardware within a vehicle. In this way the software may be scalable across a wide variety of hardware platforms, which offers the vehicle manufacturers a large degree in flexibility in deployment and ensures that the functionality is not constrained to any one vehicle manufacturer using any one on-board computing architecture.

This strategy for deployment can also be offered to offer services in an elastic way - for example, splitting features across a "small" and "large" deployment. In this configuration, the "large" software would remain dormant, using no resources while the "small" software monitors for triggers. When a trigger is found (example: Vehicle enters new country), the "small" software wakes up the "large" software so that it can execute its process before returning to a dormant state. In this way, only the smallest required amount of processing power is ever used by the system. The in-built flexibility offered by this software feature virtualisation means that OEMs can build edge processing deployments to cover their exact needs. By allowing an OEM to control when software is given resources, the OEM retains control over how the vehicle behaves. Given that there is a primary functionality associated with HMI equipment, and the OEM may wish for example to prioritise advanced driver-assistance systems, ADAS, features on the processing units, the use of the HMI to effect messaging per the present teaching may be associated with a lower or secondary rating to ensure that its use will not detract from the primary functionality of the system.

It will be appreciated that providing direct integration to the human-machine-interface in the car eliminates the need to have an active mobile application which is a danger, instead the native vehicle system will be the preferred method of interaction for the driver while they are in the car. It will be understood that in order to achieve this native HMI integration, supported options include an "Edge Client" or API integration to the OEM-navigation system where communication between the system and the vehicle will be routed through the OEM's infrastructure. As discussed above, this may advantageously make use of MQTT protocols and the use on an MQTT broker. This broker will maintain an open channel to every vehicle. When a notification is raised for a specific vehicle, data is passed to the MQTT broker, which will pass the data packet (made up of a set of instructions) to the vehicle. Once the vehicle receives the instructions, relevant software on the vehicle configured to act on these instructions will do so

This enables "*Just in time*" communication with the driver where only relevant information is supplied at a time that makes sense to the driver. In this way, once the driver starts the vehicle engine, they will be kept up to date on what their optimised route is, and any changes that may occur due to real-time changes like traffic conditions or "*driver-override*" - where a driver may intentionally or unintentionally miss a turn but the vehicle still has a need to be fulfilled. It will be appreciated - from for example the schematic process flow of Figure 16, that the appropriate routing to a device associated with a user or the HMI of the vehicle within which the user is currently driving can be effected on per-rule basis such that, for example, where a driver-vehicle assignment exists, all notifications to the driver will obey the rule: If the car is on, notifications may only be delivered to the HMI. If the car is off, notifications will be sent only to the Phone. The driver is the target in each eventuality.

Figures 13-15 show exemplary screen shots of such an HRI route planning arrangement. Having entered the vehicle, Figure 13, the system is configured to display the desired route from point A to point B. In the case where a user is given options, both candidate routes are made available on the server side. Both destination candidates are delivered to the HMI via pre-defined notification path. Once the driver makes a choice, the full routing mechanisms required to reach the destination are followed as normal. In this example, having assessed that the vehicle requires fuel, the system then populate that route with two selectable service stations as possible way points. The HRI facilitates selection of one of these and that then updates the route to be travelled.

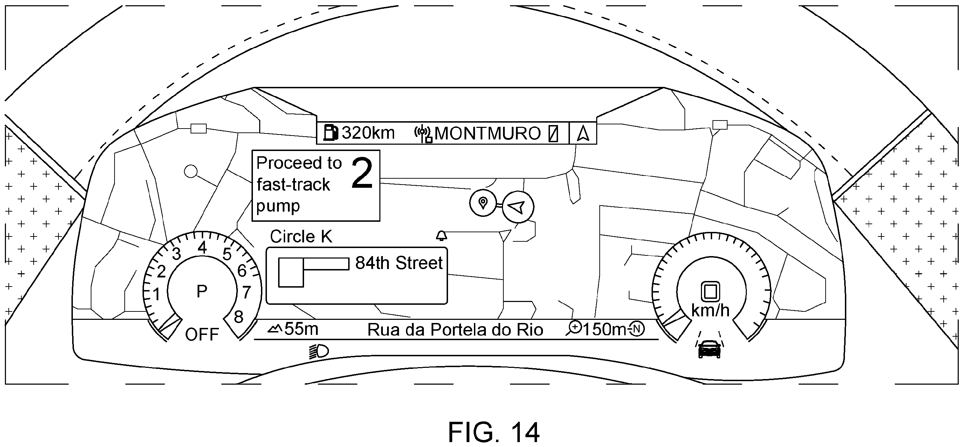

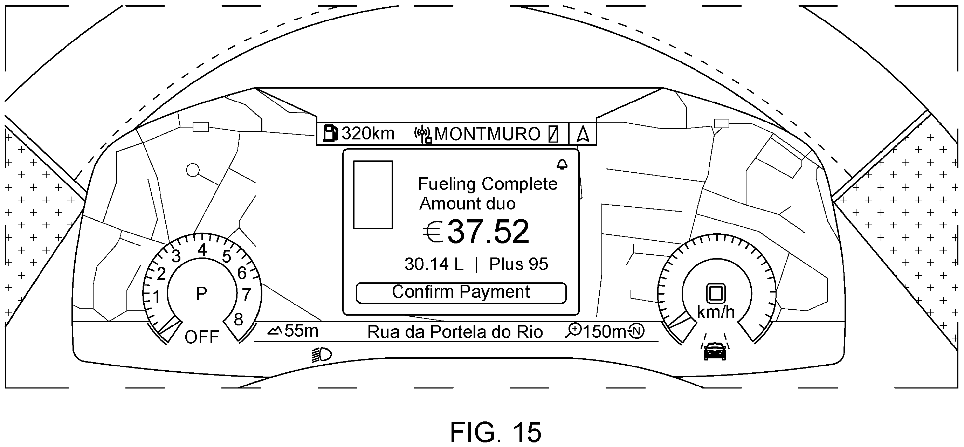

Per Figure 14, having arrived at the selected service station, the HRI is updated to direct the vehicle to a specific petrol pump. In this embodiment the user has selected the use of a frictionless forecourt option such that the data from the vehicle can be used to confirm arrival at a specific Service Provider and the filling of the vehicle with a specific volume of fuel. Using data provided directly to system from the service provider, the cost of that fuel can then be computed and displayed on the HRI - Figure 15. The user can then confirm payment and that confirmation of payment will effect a processing of that amount from the payment means that is associated with that user. It will be appreciated that this can be effected through interface with one or more of a number of Payment Processors to process payment. Per conventional use of third party payment infrastructure, payment details are stored securely with the payment provider, and the system per the present teaching acts as the orchestrator of pre-authorization, and authorization.

It will be understood that exemplary arrangements of a routing system per the present teaching have been described which is configured to collate data from individual users, or drivers, of vehicles with data from individual vehicles in a way that allows personalised optimization of the routing of the vehicle over and beyond routing that is triggered by one or either of the vehicle or the user. In effect, the use of data from both the user and the vehicle can actively allow for more intelligent navigation decisions that are communicated by the system to at least one of a human machine interface of the operating vehicle or on a mobile device associated with the user of the vehicle. Modifications can be made to that herein described without departing from scope of the present application, which is defined by the appended claims.

## Claims

1. A vehicle routing system (100) to generate future navigation routes for display within a vehicle (141), the vehicle routing system (100) being configured to associate at least one driver (131) of a plurality of drivers with at least one vehicle (141) of a plurality of vehicles, each driver (131) being associated with, and identified by, a unique identifier of a mobile device (132), each vehicle (141) being identified by a unique identifier for that vehicle (141), the vehicle routing system (100) being configured to route communications with each driver (131) using the mobile device (132) associated with that driver (131); the vehicle routing system (100) comprising:
a first data store (110) configured to store driver data (130) specific to each driver (131) of the plurality of drivers, the driver data (130) including details of historical driving activity associated with that driver (131);
a second data store (120) configured to store vehicle data (140) specific to each vehicle (141) of the plurality of vehicles, the vehicle data (140) including data related to the operation of the vehicle (141);
a communication module configured to receive telemetry data from an operating vehicle (141), the telemetry data being specific to both the operating vehicle and a current driver of the operating vehicle;
a processing engine (101) configured to:
identify usage of the operating vehicle (141) by the current driver (131) of the operating vehicle by matching the received telemetry data with relevant driver data from a known driver-vehicle assignment; and
parse the received telemetry data from the operating vehicle (141) to populate each of the first data store (110) and the second data store (120) with driver data (130) specific to the current driver (131) of the operating vehicle (141) and vehicle data (140) specific to the operating vehicle (141), respectively;
wherein the processing engine (101) comprises a predictive analysis engine (240) configured to use the telemetry data to generate a predictive analysis output of at least one of vehicle and driver behaviour, the predictive analysis output being generated using pattern recognition of historical activity as an input to future activity, the predictive analysis output providing an indication of a predicted next usage of the vehicle , wherein the predicted next usage of the vehicle corresponds to a journey between a first geographical location and a second geographical location,
wherein the predictive analysis engine (240) is configured to generate the predictive analysis output during time periods when the first vehicle is not operating,
wherein the processing engine (101) is further configured to use the predictive analysis output as one of a plurality of inputs in an optimisation process to generate a future navigation route between the first geographical location and the second geographical location for the specific combination of a first driver (131) and a first vehicle (141),
wherein generating a future navigation route comprises using data from each of the first data store (110) and the second data store (120) to associate data specific to the first driver (131) with data specific to the first vehicle (141) such that the future navigation route is generated at least partially on the basis of historical activity of the specific combination of both the first driver (131) and the first vehicle (141); and
wherein the communication module is further configured to communicate the future navigation route for display on at least one of a human machine interface of the first vehicle (141) or on the mobile device (132) associated with the first driver (131).

2. The vehicle routing system (100) of claim 1 wherein the received telemetry data includes diagnostic information relating to operating parameters of the vehicle (141).

3. The vehicle routing system (100) of claim 1 or claim 2 wherein the received telemetry data includes information pertaining to fuel levels of the operating vehicle.

4. The vehicle routing system (100) of claim 3 wherein the processing engine is configured to identify, based on the information pertaining to fuel levels of the operating vehicle, a future need for fuel for that vehicle and the future navigation route includes a waypoint associated with a fuel station.

5. The vehicle routing system (100) of any preceding claim wherein the communication module is configured to communicate with the human machine interface of the operating vehicle using native communication protocols of the operating vehicle.

6. The vehicle routing system (100) of claim 5 wherein the native communication protocols comprise MQTT protocols.

7. The vehicle routing system (100) of any preceding claim wherein the processing engine comprises an artificial intelligence, AI, model engine, the AI model engine being configured to use data from at least one of the first data store (110) or second data store (120) to identify data patterns.

8. The vehicle routing system (100) of any preceding claim configured to associate the driver data specific to each driver with a plurality of different vehicles (141), such that generating a first future navigation route for a first driver and vehicle combination is different to generating a second future navigation route for the same driver but a second different vehicle.

9. The vehicle routing system (100) of any preceding claim configured to associate the vehicle data specific to each vehicle (141) with a plurality of different drivers, such that generating a first future navigation route for a first driver and vehicle combination is different to generating a second future navigation route for the same vehicle but a second different driver.

10. The vehicle routing system (100) of any preceding claim wherein the communication module is configured to communicate with the mobile device (132) associated with the first driver using radio communication protocols.

11. The vehicle routing system (100) of any preceding claim further comprising a software application executable on an operating vehicle in communication with the communication module, the software application being configured to interface with hardware of the operating vehicle to effect a transmission of telemetry data to the communication module, and to receive navigation data for the future navigation route for display on the human machine interface of the operating vehicle.

12. The vehicle routing system (100) of claim 11 wherein the software application is at least partially executable on a modem operating system of the operating vehicle.

13. The vehicle routing system of claim 11 or 12 wherein the software application is an edge client installed on the vehicle (141), the software application being configured to communicate with the communication module using MQTT protocols.

14. A method of generating future navigation routes for display within a vehicle (141), the method comprising:
associating at least one driver (131) of a plurality of drivers with at least one vehicle (141) of a plurality of vehicles, each driver being associated with, and identified by, a unique identifier of a mobile device (132), such that communications can be routed to the mobile device associated with that driver and the or each vehicle (141) being identified by a unique identifier for that vehicle (141);
providing a first data store (110) configured to store driver data (130) specific to each driver (131) of the plurality of drivers, the driver data (130) including details of historical driving activity associated with that driver (131);
providing a second data store (120) configured to store vehicle data (140) specific to each vehicle (141) of the plurality of vehicles, the vehicle data (140) including telemetry data related to the operation of the vehicle (141);
providing a communication module configured to receive telemetry data from an operating vehicle (141), the telemetry data being specific to both the operating vehicle (141) and a current driver (131) of the operating vehicle (141);
providing a processing engine (101) comprising a predictive analysis engine (240);
using the processing engine (101) to:
identify usage of the operating vehicle (141) by the current driver (131) of the operating vehicle by matching the received telemetry data with relevant driver data from a known driver-vehicle assignment; and
parse the received telemetry data from the operating vehicle (141) to populate each of the first data store (110) and second data store (120) with driver data (130) specific to the current driver (131) of the operating vehicle and vehicle data (140) specific to the operating vehicle (141), respectively;
during time periods when a first vehicle of the plurality of vehicles is not operating, using the predictive analysis engine (240) to:
use the telemetry data to generate a predictive analysis output of at least one of vehicle and driver behaviour, the predictive analysis output being generated using pattern recognition of historical activity as an input to future activity, the predictive analysis output providing an indication of a predicted next usage of the vehicle, wherein the predicted next usage of the vehicle corresponds to a journey between a first geographical location and a second geographical location and wherein the predictive analysis engine is configured to generate the predictive analysis output,
using the processing engine to:
generate, using the predictive analysis output as one of a plurality of inputs in an optimisation process, a future navigation route between the first geographical location and the second geographical location for the specific combination of a first driver (131) and a first vehicle (141),
wherein generating a future navigation route comprises using data from each of the first data store (110) and the second data store (120) to associate data specific to the first driver (131) with data specific to the first vehicle (141) such that the future navigation route is generated at least partially on the basis of historical activity of the specific combination of both the first driver (131) and the first vehicle (141); and
using the communication module to communicate the future navigation route for display on at least one of a human machine interface of the first vehicle (141) or on the mobile device (132) associated with the first driver (131).

## Patentansprüche

1. Ein Fahrzeugroutenplanungssystem (100) zum Erzeugen von zukünftigen Navigationsrouten zur Anzeige innerhalb eines Fahrzeugs (141), wobei das Fahrzeugroutenplanungssystem (100) konfiguriert ist, um mindestens einen Fahrer (131) einer Vielzahl von Fahrern mit mindestens einem Fahrzeug (141) einer Vielzahl von Fahrzeugen zu assoziieren, wobei jeder Fahrer (131) mit einer eindeutigen Kennung eines Mobilgeräts (132) assoziiert ist und dadurch identifiziert wird, wobei jedes Fahrzeug (141) durch eine eindeutige Kennung für dieses Fahrzeug (141) identifiziert wird, wobei das Fahrzeugroutenplanungssystem (100) konfiguriert ist, um Kommunikationen mit jedem Fahrer (131) unter Verwendung des mit diesem Fahrer (131) assoziierten Mobilgeräts (132) zu leiten; wobei das Fahrzeugroutenplanungssystem (100) Folgendes beinhaltet:
einen ersten Datenspeicher (110), der konfiguriert ist, um für jeden Fahrer (131) der Vielzahl von Fahrern spezifische Fahrerdaten (130) zu speichern, wobei die Fahrerdaten (130) Details von mit diesem Fahrer (131) assoziierter vergangener Fahraktivität umfassen;
einen zweiten Datenspeicher (120), der konfiguriert ist, um für jedes Fahrzeug (141) der Vielzahl von Fahrzeugen spezifische Fahrzeugdaten (140) zu speichern, wobei die Fahrzeugdaten (140) Daten umfassen, die sich auf den Betrieb des Fahrzeugs (141) beziehen;
ein Kommunikationsmodul, das konfiguriert ist, um Telemetriedaten von einem in Betrieb befindlichen Fahrzeug (141) zu empfangen, wobei die Telemetriedaten sowohl für das in Betrieb befindliche Fahrzeug als auch für einen aktuellen Fahrer des in Betrieb befindlichen Fahrzeugs spezifisch sind;
eine Verarbeitungs-Engine (101), die für Folgendes konfiguriert ist:
Identifizieren der Verwendung des in Betrieb befindlichen Fahrzeugs (141) durch den aktuellen Fahrer (131) des in Betrieb befindlichen Fahrzeugs mittels Abgleichen der empfangenen Telemetriedaten mit relevanten Fahrerdaten aus einer bekannten Fahrer-Fahrzeug-Zuweisung; und
Parsen der empfangenen Telemetriedaten von dem in Betrieb befindlichen Fahrzeug (141), um jeden von dem ersten Datenspeicher (110) und dem zweiten Datenspeicher (120) mit Fahrerdaten (130), die für den aktuellen Fahrer (131) des in Betrieb befindlichen Fahrzeugs (141) spezifisch sind, bzw. Fahrzeugdaten (140), die für das in Betrieb befindliche Fahrzeug (141) spezifisch sind, zu füllen;
wobei die Verarbeitungs-Engine (101) eine prädiktive Analyse-Engine (240) beinhaltet, die konfiguriert ist, um die Telemetriedaten zu verwenden, um eine prädiktive Analyseausgabe von mindestens einem von Fahrzeug und Fahrerverhalten zu erzeugen, wobei die prädiktive Analyseausgabe unter Verwendung von Mustererkennung vergangener Aktivität als einer Eingabe für zukünftige Aktivität erzeugt wird,
die prädiktive Analyseausgabe eine Angabe einer vorausgesagten nächsten Verwendung des Fahrzeugs bereitstellt, wobei die vorausgesagte nächste Verwendung des Fahrzeugs einer Reise zwischen einem ersten geographischen Ort und einem zweiten geographischen Ort entspricht,
wobei die prädiktive Analyse-Engine (240) konfiguriert ist, um die prädiktive Analyseausgabe während Zeitperioden zu erzeugen, in denen das erste Fahrzeug nicht in Betrieb befindlich ist,
wobei die Verarbeitungs-Engine (101) ferner konfiguriert ist, um die prädiktive Analyseausgabe als eine einer Vielzahl von Eingaben in einen Optimierungsprozess zu verwenden, um eine zukünftige Navigationsroute zwischen dem ersten geographischen Ort und dem zweiten geographischen Ort für die spezifische Kombination von einem ersten Fahrer (131) und einem ersten Fahrzeug (141) zu erzeugen,
wobei das Erzeugen einer zukünftigen Navigationsroute das Verwenden von Daten aus jedem von dem ersten Datenspeicher (110) und dem zweiten Datenspeicher (120) beinhaltet, um für den ersten Fahrer (131) spezifische Daten mit für das erste Fahrzeug (141) spezifischen Daten zu assoziieren, sodass die zukünftige Navigationsroute mindestens teilweise basierend auf vergangener Aktivität der spezifischen Kombination von sowohl dem ersten Fahrer (131) als auch dem ersten Fahrzeug (141) erzeugt wird; und
wobei das Kommunikationsmodul ferner konfiguriert ist, um die zukünftige Navigationsroute zur Anzeige auf mindestens einem von einer Benutzerschnittstelle des ersten Fahrzeugs (141) oder auf dem mit dem ersten Fahrer (131) assoziierten Mobilgerät (132) zu übermitteln.

2. Fahrzeugroutenplanungssystem (100) gemäß Anspruch 1, wobei die empfangenen Telemetriedaten diagnostische Informationen umfassen, die sich auf Betriebsparameter des Fahrzeugs (141) beziehen.

3. Fahrzeugroutenplanungssystem (100) gemäß Anspruch 1 oder Anspruch 2, wobei die empfangenen Telemetriedaten Informationen umfassen, die Treibstofffüllstände des in Betrieb befindlichen Fahrzeugs betreffen.

4. Fahrzeugroutenplanungssystem (100) gemäß Anspruch 3, wobei die Verarbeitungs-Engine konfiguriert ist, um basierend auf Informationen, die Treibstofffüllstände des in Betrieb befindlichen Fahrzeugs betreffen, einen zukünftigen Bedarf an Treibstoff für dieses Fahrzeug zu identifizieren, und die zukünftige Navigationsroute einen mit einer Tankstelle assoziierten Wegpunkt umfasst.

5. Fahrzeugroutenplanungssystem (100) gemäß einem der vorhergehenden Ansprüche, wobei das Kommunikationsmodul konfiguriert ist, um mit der Benutzerschnittstelle des in Betrieb befindlichen Fahrzeugs unter Verwendung nativer Kommunikationsprotokolle des in Betrieb befindlichen Fahrzeugs zu kommunizieren.

6. Fahrzeugroutenplanungssystem (100) gemäß Anspruch 5, wobei die nativen Kommunikationsprotokolle MQTT-Protokolle beinhalten.

7. Fahrzeugroutenplanungssystem (100) gemäß einem der vorhergehenden Ansprüche, wobei die Verarbeitungs-Engine eine Engine mit einem Modell künstlicher Intelligenz, Kl, beinhaltet, wobei die KI-Modell-Engine konfiguriert ist, um Daten von mindestens einem von dem ersten Datenspeicher (110) oder dem zweiten Datenspeicher (120) zum Identifizieren von Datenmustern zu verwenden.

8. Fahrzeugroutenplanungssystem (100) gemäß einem der vorhergehenden Ansprüche, das konfiguriert ist, um die für jeden Fahrer spezifischen Fahrerdaten mit einer Vielzahl von unterschiedlichen Fahrzeugen (141) zu assoziieren, sodass sich das Erzeugen einer ersten zukünftigen Navigationsroute für eine erste Kombination von Fahrer und Fahrzeug von dem Erzeugen einer zweiten zukünftigen Navigationsroute für denselben Fahrer, aber ein zweites, unterschiedliches Fahrzeug unterscheidet.

9. Fahrzeugroutenplanungssystem (100) gemäß einem der vorhergehenden Ansprüche, das konfiguriert ist, um die für jedes Fahrzeug (141) spezifischen Fahrzeugdaten mit einer Vielzahl von unterschiedlichen Fahrern zu assoziieren, sodass sich das Erzeugen einer ersten zukünftigen Navigationsroute für eine erste Kombination von Fahrer und Fahrzeug von dem Erzeugen einer zweiten zukünftigen Navigationsroute für dasselbe Fahrzeug, aber einen zweiten, unterschiedlichen Fahrer unterscheidet.

10. Fahrzeugroutenplanungssystem (100) gemäß einem der vorhergehenden Ansprüche, wobei das Kommunikationsmodul konfiguriert ist, um mit dem mit dem ersten Fahrer assoziierten Mobilgerät (132) unter Verwendung von Funkkommunikationsprotokollen zu kommunizieren.

11. Fahrzeugroutenplanungssystem (100) gemäß einem der vorhergehenden Ansprüche, das ferner eine Softwareanwendung beinhaltet, die an einem in Betrieb befindlichen Fahrzeug in Kommunikation mit dem Kommunikationsmodul ausführbar ist, wobei die Softwareanwendung konfiguriert ist, um mit Hardware des in Betrieb befindlichen Fahrzeugs in Verbindung zu treten, um eine Übertragung von Telemetriedaten an das Kommunikationsmodul herbeizuführen, und um Navigationsdaten für die zukünftige Navigationsroute zur Anzeige auf der Benutzerschnittstelle des in Betrieb befindlichen Fahrzeugs zu empfangen.

12. Fahrzeugroutenplanungssystem (100) gemäß Anspruch 11, wobei die Softwareanwendung mindestens teilweise auf einem Modembetriebssystem des in Betrieb befindlichen Fahrzeugs ausführbar ist.

13. Fahrzeugroutenplanungssystem gemäß Anspruch 11 oder 12, wobei die Softwareanwendung ein Edge-Client ist, der auf dem Fahrzeug (141) installiert ist, wobei die Softwareanwendung konfiguriert ist, um mit dem Kommunikationsmodul unter Verwendung von MQTT-Protokollen zu kommunizieren.

14. Ein Verfahren zum Erzeugen von zukünftigen Navigationsrouten zur Anzeige innerhalb eines Fahrzeugs (141), wobei das Verfahren Folgendes beinhaltet:
Assoziieren mindestens eines Fahrer (131) einer Vielzahl von Fahrern mit mindestens einem Fahrzeug (141) einer Vielzahl von Fahrzeugen, wobei jeder Fahrer mit einer eindeutigen Kennung eines Mobilgeräts (132) assoziiert ist und dadurch identifiziert wird, sodass Kommunikationen zu dem mit diesem Fahrer assoziierten Mobilgerät geleitet werden können, und wobei das oder jedes Fahrzeug (141) durch eine eindeutige Kennung für dieses Fahrzeug (141) identifiziert wird;
Bereitstellen eines ersten Datenspeichers (110), der konfiguriert ist, um für jeden Fahrer (131) der Vielzahl von Fahrern spezifische Fahrerdaten (130) zu speichern, wobei die Fahrerdaten (130) Details von mit diesem Fahrer (131) assoziierter vergangener Fahraktivität umfassen;
Bereitstellen eines zweiten Datenspeichers (120), der konfiguriert ist, um für jedes Fahrzeug (141) der Vielzahl von Fahrzeugen spezifische Fahrzeugdaten (140) zu speichern, wobei die Fahrzeugdaten (140) Telemetriedaten umfassen, die sich auf den Betrieb des Fahrzeugs (141) beziehen;
Bereitstellen eines Kommunikationsmoduls, das konfiguriert ist, um Telemetriedaten von einem in Betrieb befindlichen Fahrzeug (141) zu empfangen, wobei die Telemetriedaten sowohl für das in Betrieb befindliche Fahrzeug (141) als auch für einen aktuellen Fahrer (131) des in Betrieb befindlichen Fahrzeugs (141) spezifisch sind;
Bereitstellen einer Verarbeitungs-Engine (101), die eine prädiktive Analyse-Engine (240) beinhaltet;
Verwenden der Verarbeitungs-Engine (101) für Folgendes:
Identifizieren der Verwendung des in Betrieb befindlichen Fahrzeugs (141) durch den aktuellen Fahrer (131) des in Betrieb befindlichen Fahrzeugs mittels Abgleichen der empfangenen Telemetriedaten mit relevanten Fahrerdaten aus einer bekannten Fahrer-Fahrzeug-Zuweisung; und
Parsen der empfangenen Telemetriedaten von dem in Betrieb befindlichen Fahrzeug (141), um jeden von dem ersten Datenspeicher (110) und dem zweiten Datenspeicher (120) mit Fahrerdaten (130), die für den aktuellen Fahrer (131) des in Betrieb befindlichen Fahrzeugs spezifisch sind, bzw. Fahrzeugdaten (140),
die für das in Betrieb befindliche Fahrzeug (141) spezifisch sind, zu füllen;
während Zeitperioden, in denen ein erstes Fahrzeug der Vielzahl von Fahrzeugen nicht in Betrieb befindlich ist, Verwenden der prädiktiven Analyse-Engine (240) für Folgendes:
Verwenden der Telemetriedaten, um eine prädiktive Analyseausgabe von mindestens einem von Fahrzeug und Fahrerverhalten zu erzeugen, wobei die prädiktive Analyseausgabe unter Verwendung von Mustererkennung vergangener Aktivität als einer Eingabe für zukünftige Aktivität erzeugt wird,
wobei die prädiktive Analyseausgabe eine Angabe über eine vorausgesagte nächste Verwendung des Fahrzeugs bereitstellt, wobei die vorausgesagte nächste Verwendung des Fahrzeugs einer Reise zwischen einem ersten geographischen Ort und einem zweiten geographischen Ort entspricht und wobei die prädiktive Analyse-Engine konfiguriert ist, um die prädiktive Analyseausgabe
zu erzeugen,
Verwenden der Verarbeitungs-Engine für Folgendes:
Erzeugen, unter Verwendung der prädiktiven Analyseausgabe als eine einer Vielzahl von Eingaben in einen Optimierungsprozess, einer zukünftigen Navigationsroute zwischen dem ersten geographischen Ort und dem zweiten geographischen Ort für die spezifische Kombination von einem ersten Fahrer (131) und einem ersten Fahrzeug (141), wobei das Erzeugen einer zukünftigen Navigationsroute das Verwenden von Daten aus jedem von dem ersten Datenspeicher (110) und dem zweiten Datenspeicher (120) beinhaltet, um für den ersten Fahrer (131) spezifische Daten mit für das erste Fahrzeug (141) spezifischen Daten zu assoziieren, sodass die zukünftige Navigationsroute mindestens teilweise basierend auf vergangener Aktivität der spezifischen Kombination von sowohl dem ersten Fahrer (131) als auch dem ersten Fahrzeug (141) erzeugt wird; und
Verwenden des Kommunikationsmoduls, um die zukünftige Navigationsroute zur Anzeige auf mindestens einem von einer Benutzerschnittstelle des ersten Fahrzeugs (141) oder auf dem mit dem ersten Fahrer (131) assoziierten Mobilgerät (132) zu übermitteln.

## Revendications

1. Un système de routage de véhicule (100) pour générer de futurs itinéraires de navigation pour un affichage au sein d'un véhicule (141), le système de routage de véhicule (100) étant configuré pour associer au moins un conducteur (131) d'une pluralité de conducteurs à au moins un véhicule (141) d'une pluralité de véhicules, chaque conducteur (131) étant associé à, et identifié par, un identifiant unique d'un dispositif mobile (132), chaque véhicule (141) étant identifié par un identifiant unique pour ce véhicule (141), le système de routage de véhicule (100) étant configuré pour router des communications avec chaque conducteur (131) à l'aide du dispositif mobile (132) associé à ce conducteur (131) ; le système de routage de véhicule (100) comprenant :
une première unité de stockage de données (110) configurée pour stocker des données de conducteur (130) spécifiques à chaque conducteur (131) de la pluralité de conducteurs, les données de conducteur (130) incluant des détails d'activité de conduite historique associée à ce conducteur (131) ;
une deuxième unité de stockage de données (120) configurée pour stocker des données de véhicule (140) spécifiques à chaque véhicule (141) de la pluralité de véhicules, les données de véhicule (140) incluant des données ayant trait à la mise en fonctionnement du véhicule (141) ;
un module de communication configuré pour recevoir des données de télémesure en provenance d'un véhicule (141) en fonctionnement, les données de télémesure étant spécifiques à la fois au véhicule en fonctionnement et à un conducteur actuel du véhicule en fonctionnement ;
un moteur de traitement (101) configuré pour :
identifier l'utilisation du véhicule (141) en fonctionnement par le conducteur (131) actuel du véhicule en fonctionnement en faisant concorder les données de télémesure reçues avec des données de conducteur pertinentes provenant d'une mission conducteur-véhicule connue ; et
analyser les données de télémesure reçues provenant du véhicule (141) en fonctionnement afin de remplir chaque unité de stockage parmi la première unité de stockage de données (110) et la deuxième unité de stockage de données (120) avec des données de conducteur (130) spécifiques au conducteur (131) actuel du véhicule (141) en fonctionnement et des données de véhicule (140) spécifiques au véhicule (141) en fonctionnement, respectivement ;
dans lequel le moteur de traitement (101) comprend un moteur d'analyse prédictive (240) configuré pour utiliser les données de télémesure pour générer une sortie d'analyse prédictive d'au moins un comportement parmi un comportement de véhicule et un comportement de conducteur, la sortie d'analyse prédictive étant générée à l'aide d'une reconnaissance de schéma d'activité historique comme entrée à une future activité,
la sortie d'analyse prédictive fournissant une indication d'une prochaine utilisation prédite du véhicule, la prochaine utilisation prédite du véhicule correspondant à un trajet entre un premier emplacement géographique et un deuxième emplacement géographique,
dans lequel le moteur d'analyse prédictive (240) est configuré pour générer la sortie d'analyse prédictive durant des laps de temps pendant lesquels le premier véhicule n'est pas en fonctionnement,
dans lequel le moteur de traitement (101) est configuré en outre pour utiliser la sortie d'analyse prédictive comme une entrée d'une pluralité d'entrées dans un processus d'optimisation pour générer un futur itinéraire de navigation entre le premier emplacement géographique et le deuxième emplacement géographique pour la combinaison spécifique d'un premier conducteur (131) et d'un premier véhicule (141),
dans lequel la génération d'un futur itinéraire de navigation comprend l'utilisation de données provenant de chaque unité de stockage parmi la première unité de stockage de données (110) et la deuxième unité de stockage de données (120) pour associer des données spécifiques au premier conducteur (131) à des données spécifiques au premier véhicule (141) de telle sorte que le futur itinéraire de navigation est généré au moins en partie sur la base de l'activité historique de la combinaison spécifique à la fois du premier conducteur (131) et du premier véhicule (141) ; et
dans lequel le module de communication est configuré en outre pour communiquer le futur itinéraire de navigation pour un affichage sur au moins un élément parmi une interface homme-machine du premier véhicule (141) et le dispositif mobile (132) associé au premier conducteur (131).

2. Le système de routage de véhicule (100) de la revendication 1 dans lequel les données de télémesure reçues incluent des informations de diagnostic liées à des paramètres de fonctionnement du véhicule (141).

3. Le système de routage de véhicule (100) de la revendication 1 ou de la revendication 2 dans lequel les données de télémesure reçues incluent des informations relatives aux niveaux de carburant du véhicule en fonctionnement.

4. Le système de routage de véhicule (100) de la revendication 3 dans lequel le moteur de traitement est configuré pour identifier, sur la base des informations relatives aux niveaux de carburant du véhicule en fonctionnement, un futur besoin en carburant pour ce véhicule et le futur itinéraire de navigation inclut un point de cheminement associé à une station de carburant.

5. Le système de routage de véhicule (100) de n'importe quelle revendication précédente dans lequel le module de communication est configuré pour communiquer avec l'interface homme-machine du véhicule en fonctionnement à l'aide de protocoles de communication natifs du véhicule en fonctionnement.

6. Le système de routage de véhicule (100) de la revendication 5 dans lequel les protocoles de communication natifs comprennent des protocoles MQTT.

7. Le système de routage de véhicule (100) de n'importe quelle revendication précédente dans lequel le moteur de traitement comprend un moteur de modèle d'intelligence artificielle, lA, le moteur de modèle d'lA étant configuré pour utiliser des données provenant d'au moins une unité de stockage parmi la première unité de stockage de données (110) et la deuxième unité de stockage de données (120) pour identifier des schémas de données.

8. Le système de routage de véhicule (100) de n'importe quelle revendication précédente configuré pour associer les données de conducteur spécifiques à chaque conducteur à une pluralité de différents véhicules (141), de telle sorte que la génération d'un premier futur itinéraire de navigation pour une première combinaison de conducteur et de véhicule est différente de la génération d'un deuxième futur itinéraire de navigation pour le même conducteur mais pour un deuxième véhicule différent.

9. Le système de routage de véhicule (100) de n'importe quelle revendication précédente configuré pour associer les données de véhicule spécifiques à chaque véhicule (141) à une pluralité de différents conducteurs, de telle sorte que la génération d'un premier futur itinéraire de navigation pour une première combinaison de conducteur et de véhicule est différente de la génération d'un deuxième futur itinéraire de navigation pour le même véhicule mais pour un deuxième conducteur différent.

10. Le système de routage de véhicule (100) de n'importe quelle revendication précédente dans lequel le module de communication est configuré pour communiquer avec le dispositif mobile (132) associé au premier conducteur à l'aide de protocoles de communication radio.

11. Le système de routage de véhicule (100) de n'importe quelle revendication précédente comprenant en outre une application logicielle pouvant être exécutée sur un véhicule en fonctionnement en communication avec le module de communication, l'application logicielle étant configurée pour faire l'interface avec du matériel informatique du véhicule en fonctionnement pour effectuer une transmission de données de télémesure au module de communication, et pour recevoir des données de navigation pour le futur itinéraire de navigation pour un affichage sur l'interface homme-machine du véhicule en fonctionnement.

12. Le système de routage de véhicule (100) de la revendication 11 dans lequel l'application logicielle peut être au moins en partie exécutée sur un système d'exploitation modem du véhicule en fonctionnement.

13. Le système de routage de véhicule de la revendication 11 ou de la revendication 12 dans lequel l'application logicielle est un client en périphérie installé sur le véhicule (141), l'application logicielle étant configurée pour communiquer avec le module de communication à l'aide de protocoles MQTT.

14. Un procédé de génération de futurs itinéraires de navigation pour un affichage au sein d'un véhicule (141), le procédé comprenant :
l'association d'au moins un conducteur (131) d'une pluralité de conducteurs à au moins un véhicule (141) d'une pluralité de véhicules, chaque conducteur étant associé à, et identifié par, un identifiant unique d'un dispositif mobile (132), de telle sorte que des communications peuvent être routées vers le dispositif mobile associé à ce conducteur et le ou chaque véhicule (141) étant identifié par un identifiant unique pour ce véhicule (141) ;
la fourniture d'une première unité de stockage de données (110) configurée pour stocker des données de conducteur (130) spécifiques à chaque conducteur (131) de la pluralité de conducteurs, les données de conducteur (130) incluant des détails d'activité de conduite historique associée à ce conducteur (131) ;
la fourniture d'une deuxième unité de stockage de données (120) configurée pour stocker des données de véhicule (140) spécifiques à chaque véhicule (141) de la pluralité de véhicules, les données de véhicule (140) incluant des données de télémesure ayant trait à la mise en fonctionnement du véhicule (141) ;
la fourniture d'un module de communication configuré pour recevoir des données de télémesure en provenance d'un véhicule (141) en fonctionnement, les données de télémesure étant spécifiques à la fois au véhicule (141) en fonctionnement et à un conducteur (131) actuel du véhicule (141) en fonctionnement ;
la fourniture d'un moteur de traitement (101) comprenant un moteur d'analyse prédictive (240) ;
l'utilisation du moteur de traitement (101) pour :
identifier l'utilisation du véhicule (141) en fonctionnement par le conducteur (131) actuel du véhicule en fonctionnement en faisant concorder les données de télémesure reçues avec des données de conducteur pertinentes provenant d'une mission conducteur-véhicule connue ; et
analyser les données de télémesure reçues provenant du véhicule (141) en fonctionnement afin de remplir chaque unité de stockage parmi la première unité de stockage de données (110) et la deuxième unité de stockage de données (120) avec des données de conducteur (130) spécifiques au conducteur (131) actuel du véhicule en fonctionnement et des données de véhicule (140) spécifiques au véhicule (141) en fonctionnement, respectivement ;
durant des laps de temps pendant lesquels un premier véhicule de la pluralité de véhicules n'est pas en fonctionnement, l'utilisation du moteur d'analyse prédictive (240) pour :
utiliser les données de télémesure pour générer une sortie d'analyse prédictive d'au moins un comportement parmi un comportement de véhicule et un comportement de conducteur, la sortie d'analyse prédictive étant générée à l'aide d'une reconnaissance de schéma d'activité historique comme entrée à une future activité, la sortie d'analyse prédictive fournissant une indication d'une prochaine utilisation prédite du véhicule, la prochaine utilisation prédite du véhicule correspondant à un trajet entre un premier emplacement géographique et un deuxième emplacement géographique et le moteur d'analyse prédictive étant configuré pour générer la sortie d'analyse prédictive,
l'utilisation du moteur de traitement pour :
générer, à l'aide de la sortie d'analyse prédictive comme une entrée d'une pluralité d'entrées dans un processus d'optimisation, un futur itinéraire de navigation entre le premier emplacement géographique et le deuxième emplacement géographique pour la combinaison spécifique d'un premier conducteur (131) et d'un premier véhicule (141), la génération d'un futur itinéraire de navigation comprenant l'utilisation de données provenant de chaque unité de stockage parmi la première unité de stockage de données (110) et la deuxième unité de stockage de données (120) pour associer des données spécifiques au premier conducteur (131) à des données spécifiques au premier véhicule (141) de telle sorte que le futur itinéraire de navigation est généré au moins en partie sur la base d'activité historique de la combinaison spécifique à la fois du premier conducteur (131) et du premier véhicule (141) ; et
l'utilisation du module de communication pour communiquer le futur itinéraire de navigation pour un affichage sur au moins un élément parmi une interface homme-machine du premier véhicule (141) et le dispositif mobile (132) associé au premier conducteur (131).
